# EUROPÄISCHE PATENTSCHRIFT

(11) **EP 4 248 259 B1**
(45) Veröffentlichungstag und Bekanntmachung des Hinweises auf die Patenterteilung: **07.01.2026**
(21) Anmeldenummer: 21805987.1
(22) Anmeldetag: 12.11.2021
(51) Int. Cl.: G02B 27/01, B32B 17/10

(54) **PROJEKTIONSANORDNUNG FÜR EIN HEAD-UP-DISPLAY (HUD) MIT P-POLARISIERTER STRAHLUNG**
PROJECTION ASSEMBLY FOR A HEAD-UP DISPLAY (HUD) WITH P-POLARIZED IRRADIATION
DISPOSITIF DE PROJECTION POUR UN AFFICHAGE TÊTE HAUTE (HUD) À RAYONNEMENT P-POLARISÉ

(30) Priorität: 23.11.2020 EP 20209110
(43) Veröffentlichungstag der Anmeldung: 27.09.2023
(73) Patentinhaber: Saint-Gobain Sekurit France, 60150 Thourotte (FR)
(72) Erfinder: SCHMADTKE, Lisa, 52146 Würselen (DE); GILLESSEN, Stephan, 52477 Alsdorf (DE); DO ROSARIO, Jefferson, 52064 Aachen (DE)
(74) Vertreter: Gebauer, Dieter Edmund
(86) Internationale Anmeldenummer: PCT/EP2021/081529
(87) Internationale Veröffentlichungsnummer: WO 2022/106315

(56) Entgegenhaltungen:
- WO-A1-2017/077133
- WO-A1-2020/094423
- CN-U- 205 899 060
- US-A1- 2014 340 759

## Beschreibung

Die Erfindung betrifft eine Projektionsanordnung für ein Head-Up-Display und ein Verfahren zur Herstellung einer Windschutzscheibe der Projektionsanordnung.

Moderne Automobile werden in zunehmendem Maße mit sogenannten Head-Up-Displays (HUDs) ausgestattet. Mit einem Projektor, typischerweise im Bereich des Armaturenbretts, werden Bilder auf die Windschutzscheibe projiziert, dort reflektiert und vom Fahrer als virtuelles Bild (von ihm aus gesehen) hinter der Windschutzscheibe wahrgenommen. So können wichtige Informationen in das Blickfeld des Fahrers projiziert werden, beispielsweise die aktuelle Fahrtgeschwindigkeit, Navigations- oder Warnhinweise, die der Fahrer wahrnehmen kann, ohne seinen Blick von der Fahrbahn wenden zu müssen. Head-Up-Displays können so wesentlich zur Steigerung der Verkehrssicherheit beitragen.

HUD-Projektoren werden überwiegend mit s-polarisierter Strahlung betrieben und bestrahlen die Windschutzscheibe mit einem Einfallswinkel von etwa 65%, was nahe dem Brewster-Winkel für einen Luft-Glas-Übergang liegt (56,5° für Kalk-Natron-Glas). Dabei tritt das Problem auf, dass das Projektorbild an beiden externen Oberflächen der Windschutzscheibe reflektiert wird. Dadurch tritt neben dem gewünschten Hauptbild auch ein leicht versetztes Nebenbild auf, das sogenannte Geisterbild ("Ghost"). Das Problem wird üblicherweise dadurch gemindert, dass die Oberflächen in einem Winkel zueinander eingeordnet werden, insbesondere durch Verwendung einer keilartigen Zwischenschicht zur Lamination der als Verbundscheibe ausgebildeten Windschutzscheiben, sodass Hauptbild und Geisterbild einander überlagert werden. Verbundgläser mit Keilfolien für HUDs sind beispielsweise aus WO 2009/071135 A1, EP 1800855 B1 oder EP 1880243 A2 bekannt.

Die Keilfolien sind kostspielig, sodass die Herstellung einer solchen Verbundscheibe für ein HUD recht kostenintensiv ist. Es besteht daher Bedarf an HUD-Projektionsanordnungen, die mit Windschutzscheiben ohne Keilfolien auskommen. So ist es beispielsweise möglich, den HUD-Projektor mit p-polarisierter Strahlung zu betreiben, welche an den Scheibenoberflächen nicht wesentlich reflektiert wird. Als Reflexionsfläche für die p-polarisierte Strahlung weist die Windschutzscheibe stattdessen eine Reflexionsbeschichtung auf. Die EP 3187917 A2 offenbart eine solche HUD-Projektionsanordnung, welche mit p-polarisierter Strahlung betrieben wird. Als reflektierende Struktur wird unter anderem eine einzelne metallische Schicht vorgeschlagen, die zwischen zwei dielektrischen Schichten eingebettet ist, wobei die metallische Schicht zwischen den beiden Einzelscheiben der Windschutzscheibe angeordnet ist. Alternativ kann die metallische Schicht auch in Kombination mit einer Polymerschicht auf einer außenliegenden Seite der Windschutzscheibe angeordnet sein.

Auch in der WO 2020094423 A1 wird eine HUD-Projektionsanordnung beschrieben mit einer Reflexionsbeschichtung umfassend drei Silberschichten jeweils eingebettet zwischen dielektrischen Schichten als Projektionsfläche für p-polarisierte Strahlung. Die Schrift CN 205899060 U offenbart Scheiben für eine HUD-Projektionsanordnung mit einer oder zwei Silberschichten, die zwischen dielektrischen Schichten eingebettet sind.

Es besteht Bedarf an Windschutzscheiben, die zusätzlich zu der Funktion als Reflexionsfläche für die p-polarisierte Strahlung weitere Funktionen haben. Besondere Bedeutung hat eine Heizfunktion. Diese ermöglicht, ein Beschlagen der Scheibe zu verhindern oder erleichtert das Enteisen einer Scheibe. Es ist möglich, die Reflexionsbeschichtung selbst als heizbare Beschichtung zu nutzen, wie zum Beispiel in CN 106526854 offenbart ist. Es ist jedoch schwierig, beide Funktionen in einer Beschichtung optimal zu vereinen.

Eine elektrische Beheizung der Scheibe kann wie beispielsweise in DE 10352464 A1 beschrieben über vertikal verlaufende elektrisch beheizbare Drähte erfolgen, die zwischen den Scheiben des Verbundglases eingebracht sind und über zwei Sammelleiter mit dem Kraftfahrzeug-Bordnetz verbunden sind. Eine weitere Scheibe mit beheizbaren Drähten ist offenbart in der WO 2017077133 A1.

CN 106630688 offenbart eine Verbundscheibe mit einer Reflexionsbeschichtung für p-polarisierte Strahlung auf der zum Fahrzeuginnenraum weisenden Seite der Innenscheibe und einer Low-E-Beschichtung auf der zur thermoplastischen Zwischenschicht weisenden Seite der Außenscheibe. Ein Nachteil dieser Konfiguration ist, dass durch die zusätzliche Beschichtung die Transmission der Scheibe weiter erniedrigt wird, was im Fall von Windschutzscheiben problematisch ist.

Es besteht daher Bedarf an Projektionsanordnungen für HUDs mit Reflexionsbeschichtungen, die eine hohe Transmission im sichtbaren Spektralbereich gewährleisten sowie eine hohe Reflektivität gegenüber p-polarisierter Strahlung aufweisen und gleichzeitig beheizbar sind. Der vorliegenden Erfindung liegt die Aufgabe zugrunde, eine solche verbesserte Projektionsanordnung bereitzustellen.

Die Aufgabe der vorliegenden Erfindung wird erfindungsgemäß durch eine Projektionsanordnung gemäß Anspruch 1 gelöst. Bevorzugte Ausführungen gehen aus den Unteransprüchen hervor.

Erfindungsgemäß wird p-polarisierte Strahlung zur Erzeugung des HUD-Bildes verwendet und die Verbundscheibe weist eine Reflexionsbeschichtung auf, welche p-polarisierte Strahlung hinreichend reflektiert. Da der für HUD-Projektionsanordnungen typische Einfallswinkel von etwa 65° dem Brewsterwinkel für einen Luft-Glas-Übergang (56,5°, Kalk-Natron-Glas) relativ nahekommt, wird p-polarisierte Strahlung von den Scheibenoberflächen kaum reflektiert, sondern hauptsächlich von der leitfähigen Beschichtung. Geisterbilder treten daher nicht oder kaum wahrnehmbar auf, sodass auf die Verwendung einer kostspieligen Keilfolie verzichtet werden kann. Außerdem ist das HUD-Bild auch für Träger von polarisationsselektiven Sonnenbrillen erkennbar, welche typischerweise nur p-polarisierte Strahlung passieren lassen und s-polarisierte Strahlung blocken. Die erfindungsgemäße Reflexionsbeschichtung bewirkt eine hohe Reflektivität gegenüber p-polarisierter Strahlung im Spektralbereich von 450 nm bis 650 nm, der für HUD-Darstellungen relevant ist (HUD-Projektoren arbeiten typischerweise mit den Wellenlängen 473 nm, 550 nm und 630 nm (RGB)). Dadurch wird ein intensitätsstarkes HUD-Bild erreicht. Besonders im Fall einer einzelnen Silberschicht wird die Lichttransmission nicht übermäßig herabgesetzt, sodass die Scheibe weiterhin als Windschutzscheibe verwendet werden kann. Das erfindungsgemäße Verhältnis der optischen Dicken der oberen und unteren dielektrischen Schichtenfolge bewirkt eine Glättung des Reflexionsspektrums, sodass eine farbneutrale Darstellung gewährleistet ist. Die vorteilhaften Reflexionseigenschaften, insbesondere die Gleichmäßigkeit des Spektrums, erstrecken sich sogar über den HUD-relevanten Spektralbereich hinaus auf einen Spektralbereich von 400 nm bis 680 nm, sodass neben einer guten HUD-Darstellung ein positiver Gesamteindruck der Scheibe erreicht wird ohne störenden Farbstich. Zwischen der Außenscheibe und der Innenscheibe sind Heizdrähte angeordnet. Über die Heizdrähte ist ein Beheizen der Windschutzscheibe möglich, ohne dass die Transmissionswerte für die Windschutzscheibe deutlich sinken.

Die erfindungsgemäße Projektionsanordnung für ein Head-Up-Display (HUD) umfasst mindestens eine Windschutzscheibe, die mit einer Reflexionsbeschichtung versehen ist, und einen Projektor. Wie bei HUDs üblich bestrahlt der Projektor einen Bereich der Windschutzscheibe, wo die Strahlung in Richtung des Betrachters (Fahrers) reflektiert wird, wodurch ein virtuelles Bild erzeugt wird, welches der Betrachter von ihm aus gesehen hinter der Windschutzscheibe wahrnimmt. Der durch den Projektor bestrahlbare Bereich der Windschutzscheibe wird als HUD-Bereich bezeichnet. Die Strahlrichtung des Projektors kann typischerweise durch Spiegel variiert werden, insbesondere vertikal, um die Projektion an die Körpergröße des Betrachters anzupassen. Der Bereich, in dem sich die Augen des Betrachters bei gegebener Spiegelstellung befinden müssen, wird als Eyeboxfenster bezeichnet. Dieses Eyeboxfenster kann durch Verstellung der Spiegel vertikal verschoben werden, wobei der gesamte dadurch zugängliche Bereich (das heißt die Überlagerung aller möglichen Eyeboxfenster) als Eyebox bezeichnet wird. Ein innerhalb der Eyebox befindlicher Betrachter kann das virtuelle Bild wahrnehmen. Damit ist natürlich gemeint, dass sich die Augen des Betrachters innerhalb der Eyebox befinden müssen, nicht etwa der gesamte Körper.

Die hier verwendeten Fachbegriffe aus dem Bereich der HUDs sind dem Fachmann allgemein bekannt. Für eine ausführliche Darstellung sei auf die Dissertation "Simulationsbasierte Messtechnik zur Prüfung von Head-Up Displays" von Alexander Neumann am Institut für Informatik der Technischen Universität München (München: Universitätsbibliothek der TU München, 2012) verwiesen, insbesondere auf Kapitel 2 "Das Head-Up Display".

Die Windschutzscheibe umfasst eine Außenscheibe und eine Innenscheibe, die über eine thermoplastische Zwischenschicht miteinander verbunden sind. Die Windschutzscheibe ist dafür vorgesehen, in einer Fensteröffnung eines Fahrzeugs den Innenraum gegenüber der äußeren Umgebung abzutrennen. Mit Innenscheibe wird im Sinne der Erfindung die dem Fahrzeuginnenraum zugewandte Scheibe der Windschutzscheibe bezeichnet. Mit Außenscheibe wird die der äußeren Umgebung zugewandte Scheibe bezeichnet. Die Windschutzscheibe ist bevorzugt die Windschutzscheibe eines Kraftfahrzeugs, insbesondere eines Personen- oder Lastkraftwagens.

Die Windschutzscheibe weist eine Oberkante und eine Unterkante auf sowie zwei dazwischen verlaufende Seitenkanten. Mit Oberkante wird diejenige Kante bezeichnet, welche dafür vorgesehen ist, in Einbaulage nach oben zu weisen. Mit Unterkante wird diejenige Kante bezeichnet, welche dafür vorgesehen ist, in Einbaulage nach unten zu weisen. Die Oberkante wird häufig auch als Dachkante und die Unterkante als Motorkante bezeichnet.

Die Außenscheibe und die Innenscheibe weisen jeweils eine außenseitige und eine innenraumseitige Oberfläche auf und eine dazwischen verlaufende, umlaufende Seitenkante. Mit außenseitiger Oberfläche oder Außenseite wird im Sinne der Erfindung diejenige Hauptfläche bezeichnet, welche dafür vorgesehen ist, in Einbaulage der äußeren Umgebung zugewandt zu sein. Mit innenraumseitiger Oberfläche oder Innenseite wird im Sinne der Erfindung diejenige Hauptfläche bezeichnet, welche dafür vorgesehen ist, in Einbaulage dem Innenraum zugewandt zu sein. Die Innenseite der Außenscheibe und die Außenseite der Innenscheibe sind einander zugewandt und durch die thermoplastische Zwischenschicht miteinander verbunden.

Der Projektor ist auf den HUD-Bereich der Windschutzscheibe gerichtet. Die Strahlung des Projektors ist überwiegend p-polarisiert. Die Reflexionsbeschichtung ist geeignet, p-polarisierte Strahlung zu reflektieren. Dadurch wird aus der Projektorstrahlung ein virtuelles Bild erzeugt, welches der Fahrer des Fahrzeugs von ihm aus gesehen hinter der Windschutzscheibe wahrnehmen kann.

Die erfindungsgemäße Reflexionsbeschichtung weist genau eine elektrisch leitfähige Schicht auf Basis von Silber auf. Unterhalb der elektrisch leitfähigen Schicht ist eine untere dielektrische Schicht oder Schichtenfolge angeordnet. Ebenso ist oberhalb der elektrisch leitfähigen Schicht eine obere dielektrische Schicht oder Schichtenfolge angeordnet. Die obere und die untere dielektrische Schicht oder Schichtenfolge weisen jeweils einen Brechungsindex auf, der mindestens 1,9 beträgt.

Brechungsindizes sind im Rahmen der vorliegenden Erfindung grundsätzlich bezogen auf eine Wellenlänge von 550 nm angegeben. Der Brechungsindex kann beispielsweise mittels Ellipsometrie bestimmt werden. Ellipsometer sind kommerziell erhältlich, beispielsweise von der Firma Sentech. Der Brechungsindex einer oberen oder unteren dielektrischen Schicht wird vorzugsweise bestimmt, indem diese zunächst als einzelne Schicht auf einem Substrat abgeschieden wird und anschließend der Brechungsindex mittels Ellipsometrie gemessen wird. Zur Bestimmung des Brechungsindex einer oberen oder unteren dielektrischen Schichtenfolge werden die Schichten der Schichtenfolge jeweils alleine als Einzelschichten auf einem Substrat abgeschieden und anschließend der Brechungsindex mittels Ellipsometrie bestimmt. Für jede dieser Einzelschichten ist dabei erfindungsgemäß ein Brechungsindex zu erreichen, der innerhalb des angegebenen Bereichs liegt. Im Falle einer Schichtenfolge mit Brechungsindex von mindestens 1,9 haben somit alle einzelnen Schichten einen Brechungsindex von mindestens 1,9. Dielektrische Schichten mit einem Brechungsindex von mindestens 1,9 sowie Verfahren zu deren Abscheidung sind dem Fachmann auf dem Gebiet der Dünnschichten bekannt. Bevorzugt werden Methoden der physikalischen Gasphasenabscheidung, insbesondere Magnetronsputtern eingesetzt. Die optische Dicke ist das Produkt aus der geometrischen Dicke und dem Brechungsindex (bei 550 nm). Die optische Dicke einer Schichtenfolge berechnet sich als Summe der optischen Dicken der Einzelschichten. Für die Bestimmung der optischen Dicke einer Schichtenfolge werden somit für jede Einzelschicht anhand des Brechungsindex und der geometrischen Dicke der Einzelschicht die optische Dicke bestimmt und dann werden alle optischen Dicken der Einzelschichten einer Schichtenfolge addiert.

Ist eine erste Schicht oberhalb einer zweiten Schicht angeordnet, so bedeutet dies im Sinne der Erfindung, dass die erste Schicht weiter von dem Substrat, auf dem die Beschichtung aufgebracht ist, entfernt angeordnet ist als die zweite Schicht. Ist eine erste Schicht unterhalb einer zweiten Schicht angeordnet ist, so bedeutet dies im Sinne der Erfindung, dass die zweite Schicht weiter vom Substrat entfernt angeordnet ist als die erste Schicht.

Ist eine Schicht auf Basis eines Materials ausgebildet, so besteht die Schicht mehrheitlich aus diesem Material, insbesondere im Wesentlichen aus diesem Material neben etwaigen Verunreinigungen oder Dotierungen.

Erfindungsgemäß beträgt das Verhältnis der optischen Dicke der oberen dielektrischen Schicht oder Schichtenfolge zur optischen Dicke der unteren dielektrischen Schicht oder Schichtenfolge mindestens 1,7. Es hat sich überraschend gezeigt, dass diese Asymmetrie der optischen Dicken zu einem deutlich glatteren Reflexionsspektrum gegenüber p-polarisierter Strahlung führt, sodass über den gesamten relevanten Spektralbereich (400 nm bis 680 nm) ein relativ konstanter Reflexionsgrad vorliegt. Dadurch wird eine farbneutrale Darstellung der HUD-Projektion gewährleistet und ein farbneutraler Gesamteindruck der Scheibe.

Das erfindungsgemäße Verhältnis der optischen Dicken berechnet sich als Quotient aus der optischen Dicke der oberen dielektrischen Schicht oder Schichtenfolge (Divident) geteilt durch die optische Dicke der unteren dielektrischen Schicht oder Schichtenfolge (Divisor).

Die Heizdrähte sind bevorzugt so verlegt, dass die Windschutzscheibe mindestens teilweise, bevorzugt in mindestens 70%, besonders bevorzugt in mindestens 80% des Sichtbereichs beheizt werden kann. Der Sichtbereich der Scheibe ist dabei der Bereich, der nach Einbau der Scheibe im Fahrzeug sichtbar ist und nicht von einem Siebdruck abgedeckt ist. Bevorzugt sind Heizdrähte auch im HUD-Bereich angeordnet, sodass dieser frei gehalten werden kann von Eis und Beschlagen. Die Heizdrähte verlaufen beispielsweise senkrecht zur Motorkante von der Motorkante zur Dachkante über die Windschutzscheibe.

Die Heizdrähte können nicht nur im sichtbaren Bereich der Scheibe eingebracht sein, sondern auch im Randbereich der Scheibe, bevorzugt im Bereich der Ruhestellung der Scheibenwischer. Dieser Bereich ist vorzugsweise durch einen Siebdruck verdeckt. Eine gezielte Beheizung des Ruhebereichs der Scheibenwischer verhindert ein Festfrieren der Scheibenwischer und somit eine Beschädigung der Wischerblätter beim Anlaufen der Scheibenwischanlage.

In einer bevorzugten Ausführungsform ist die Reflexionsbeschichtung zwischen Innenscheibe und Außenscheibe angeordnet und so vor mechanischer Beschädigung und Korrosion geschützt.

In einer bevorzugten Ausführungsform ist die Reflexionsbeschichtung auf der zur thermoplastischen Zwischenschicht weisenden Außenseite der Innenscheibe angeordnet und die Heizdrähte sind zwischen Außenscheibe und Reflexionsbeschichtung angeordnet. So liegen Heizdrähte und Reflexionsbeschichtung zwischen Innenscheibe und Außenscheibe und sind vor Korrosion und mechanischer Beschädigung geschützt. Durch die Anordnung der Reflexionsbeschichtung auf der Innenscheibe wird die p-polarisierte Strahlung zu einem großen Teil von der Reflexionsbeschichtung reflektiert, sodass ein deutliches HUD-Bild vom Betrachter wahrgenommen wird. Die aus Sicht des Fahrzeugführers dahinter angeordneten Drähte führen nicht zu störenden Reflektionen und stören nicht die Wahrnehmung des HUD-Bilds.

In einer weiteren bevorzugten Ausführungsform ist die Reflexionsbeschichtung auf der zur thermoplastischen Zwischenschicht weisenden Innenseite der Außenscheibe angeordnet und die Heizdrähte sind zwischen Reflexionsbeschichtung und Innenscheibe angeordnet. So liegen Heizdrähte und Reflexionsbeschichtung zwischen Innenscheibe und Außenscheibe und sind somit vor Korrosion und mechanischer Beschädigung geschützt.

In einer weiteren bevorzugten Ausführungsform ist die Reflexionsbeschichtung auf der Innenseite der Innenscheibe angeordnet und die Heizdrähte sind zwischen der Außenscheibe und der Innenscheibe angeordnet. Die Heizdrähte sind somit vor Korrosion und mechanischer Beschädigung geschützt. Durch die Anordnung der Reflexionsbeschichtung auf der Innenseite der Innenscheibe wird die p-polarisierte Strahlung zu einem großen Teil von der Reflexionsbeschichtung reflektiert, sodass ein deutliches HUD-Bild vom Betrachter wahrgenommen wird. Die aus Sicht des Fahrzeugführers dahinter angeordneten Drähte führen nicht zu störenden Reflektionen und stören nicht die Wahrnehmung des HUD-Bilds. Da die Reflexionsbeschichtung auf der zum Fahrzeugführer weisenden Seite der Innenscheibe liegt, ist sie vor äußeren Witterungseinflüssen geschützt. Eine zusätzliche Schutzschicht kann die Reflexionsbeschichtung zudem vor mechanischer Beschädigung schützen.

In einer bevorzugten Ausführungsform sind die Heizdrähte auf der zur Innenscheibe weisenden Seite in die thermoplastische Zwischenschicht eingebettet oder auf der zur Außenscheibe weisenden Seite in die thermoplastische Zwischenschicht eingebettet. Die Heizdrähte werden dabei während der Herstellung auf die thermoplastische Zwischenschicht aufgelegt und unter dem Einfluss von Wärme auf einer Seite in die thermoplastische Zwischenschicht eingebettet. Bevorzugt sind die Heizdrähte auf der zur Außenscheibe weisenden Seite in die thermoplastische Zwischenschicht eingebettet. So kann die bei niedrigen Außentemperaturen kältere Außenscheibe effizienter erwärmt werden, weil der Abstand zur Außenscheibe geringer ist als wenn die Heizdrähte auf der anderen Seite angeordnet sind.

In einer bevorzugten Ausführungsform enthalten die Heizdrähte ein Metall wie Wolfram, Kupfer, Nickel, Mangan, Aluminium, Silber, Chrom und / oder Eisen oder bestehen im Wesentlichen daraus, bevorzugt Wolfram, Silber oder Kupfer, besonders bevorzugt Wolfram.

Die Heizdrähte können wahlweise elektrisch isoliert sein. Dies ermöglicht einen Kontakt zwischen Drähten und Beschichtung unter Vermeidung von Kurzschlüssen. Die thermoplastische Zwischenschicht kann somit mit den Drähten auch in Richtung der Reflexionsbeschichtung zeigend angeordnet werden. Wird auf eine Isolierung der Drähte verzichtet, so liegen die Heizdrähte bevorzugt auf der der Reflexionsbeschichtung abgewandten Seite der thermoplastischen Zwischenschicht. Eine Isolierung der Drähte wird bevorzugt durch eine polymerhaltige Ummantelung erreicht, besonders bevorzugt enthält diese Polyethylen, Polyvinylchlorid, Polytetrafluorethylen, Polyester, Polycarbonate, Gummi, Silikongummi, Polyamid, Polyurethan und/oder Copolymere davon oder besteht daraus.

Wolframdrähte sind bevorzugt graphitiert, das heißt mit einer dünnen Graphitschicht überzogen. Dies verhindert unerwünschte Reflektionen an den Drähten.

Der minimale Abstand benachbarter Heizdrähte beträgt 1 mm, während der maximale Abstand benachbarter Drähte 35 mm beträgt, bevorzugt beträgt der Abstand benachbarter Heizdrähte zwischen 2 mm und 5 mm.

Die Heizdrähte weisen eine Dicke auf von 5 µm bis 160 µm, wobei die Dicke unter anderem vom verwendeten Material der Drähte abhängt. Wolframdrähte werden bevorzugt mit einer Dicke von 10 µm bis 80 µm eingesetzt, während Kupferdrähte bevorzugt eine Dicke von 60 µm bis 150 µm aufweisen.

Die Heizdrähte sind üblicherweise mit elektrischen Leitern verbunden, die bevorzugt aus dünnen und schmalen Metallfolienstreifen (Kupfer, Aluminium) bestehen, die vor und/oder nach dem Auflegen der Heizdrähte aufgelegt werden. Die Folienstreifen sind mit einem Lot vorbeschichtet (vorverzinnt) und werden mit den Drähten verlötet, wobei das Lot für eine möglichst enge Einbettung der Drähte zu sorgen hat. Diese Merkmale sind im Stand der Technik bekannt. Die elektrischen Leiter haben im Vergleich mit den Heizdrähten vernachlässigbare ohmsche Widerstände.

In einer bevorzugten Ausgestaltung beträgt in der Reflexionsbeschichtung das Verhältnis der optischen Dicke der oberen dielektrischen Schicht oder Schichtenfolge zur optischen Dicke der unteren dielektrischen Schicht oder Schichtenfolge mindestens 1,8, besonders bevorzugt mindestens 1,9. Damit werden besonders gute Ergebnisse erzielt.

Die Reflexionsbeschichtung ist transparent, was im Sinne der Erfindung bedeutet, dass sie eine mittlere Transmission im sichtbaren Spektralbereich von mindestens 70 %, bevorzugt mindestens 80 % aufweist und dadurch die Durchsicht durch die Scheibe nicht wesentlich einschränkt. Grundsätzlich ist es ausreichend, wenn der HUD-Bereich der Windschutzscheibe mit der Reflexionsbeschichtung versehen ist. Es können aber auch weitere Bereiche mit der Reflexionsbeschichtung versehen sein und die Windschutzscheibe kann im wesentlichen vollflächig mit der Reflexionsbeschichtung versehen sein, was herstellungsbedingt bevorzugt sein kann. In einer Ausgestaltung der Erfindung sind mindestens 80% der Scheibenoberfläche mit der erfindungsgemäßen Reflexionsbeschichtung versehen. Insbesondere ist die Reflexionsbeschichtung vollflächig auf die Scheibenoberfläche aufgebracht mit Ausnahme eines umlaufenden Randbereichs und optional lokaler Bereich, die als Kommunikations-, Sensor- oder Kamerafenster die Transmission von elektromagnetischer Strahlung durch die Windschutzscheibe gewährleisten sollen und daher nicht mit der Reflexionsbeschichtung versehen sind. Der umlaufende unbeschichtete Randbereich weist beispielsweise eine Breite von bis zu 20 cm auf. Er verhindert den direkten Kontakt der Reflexionsbeschichtung zur umgebenden Atmosphäre, sodass die Reflexionsbeschichtung im Innern der Windschutzscheibe vor Korrosion und Beschädigung geschützt ist.

Die erfindungsgemäße Reflexionsbeschichtung weist aufgrund der elektrisch leitfähigen Silberschicht IR-reflektierende Eigenschaften auf, sodass sie als Sonnenschutzbeschichtung fungiert, welche die Aufheizung des Fahrzeuginnenraums durch Reflexion der Wärmestrahlung verringert. Die Reflexionsbeschichtung kann auch als Heizbeschichtung verwendet werden, wenn sie elektrisch kontaktiert wird, sodass ein Strom durch sie fließt, welcher die Reflexionsbeschichtung erwärmt.

Die mit der Reflexionsbeschichtung versehene Windschutzscheibe weist bevorzugt im Spektralbereich von 400 nm bis 680 nm einen gemittelten Reflexionsgrad gegenüber p-polarisierter Strahlung von mindestens 15% auf, besonders bevorzugt von mindestens 20%. Damit wird ein hinreichend intensitätsstarkes Projektionsbild erzeugt. Hierbei wird der Reflexionsgrad gemessen mit einem Einfallswinkel von 65° zur innenraumseitigen Flächennormalen, was etwa der Bestrahlung durch übliche Projektoren entspricht. Der Spektralbereich von 400 nm bis 680 nm wurde zur Charakterisierung der Reflexionseigenschaften herabgezogen, weil der optische Eindruck eines Betrachters in erster Linie durch diesen Spektralbereich geprägt wird. Außerdem deckt er die für die HUD-Darstellung relevanten Wellenlängen ab (RGB: 473 nm, 550 nm, 630 nm). Der hohe Reflexionsgrad bei einem vergleichsweise einfachen Schichtaufbau ist ein großer Vorteil der vorliegenden Erfindung. Besonders gute Ergebnisse werden erzielt, wenn der Reflexionsgrad im gesamten Spektralbereich von 400 nm bis 680 nm mindestens 15 %, bevorzugt mindestens 20 % beträgt, sodass der Reflexionsgrad im angegeben Spektralbereich an keiner Stelle unter den angegebenen Werten liegt.

Der Reflexionsgrad beschreibt den Anteil der insgesamt eingestrahlten Strahlung, der reflektiert wird. Er wird in % angegeben (bezogen auf 100% eingestrahlte Strahlung) oder als einheitenlose Zahl von 0 bis 1 (normiert auf die eingestrahlte Strahlung). Aufgetragen in Abhängigkeit von der Wellenlänge bildet er das Reflexionsspektrum. Die Ausführungen zum Reflexionsgrad gegenüber p-polarisierter Strahlung beziehen sich im Rahmen der vorliegenden Erfindung auf den Reflexionsgrad gemessen mit einem Einfallswinkel von 65° zur innenraumseitigen Flächennormalen. Die Angaben zum Reflexionsgrad beziehungsweise zum Reflexionsspektrum beziehen sich auf eine Reflexionsmessung mit einer Lichtquelle, die im betrachteten Spektralbereich gleichmäßig abstrahlt mit einer normierten Strahlungsintensität von 100%.

Um eine möglichst farbneutrale Darstellung des Projektorbilds zu erreichen, sollte das Reflexionsspektrum möglichst glatt sein und keine ausgeprägten lokalen Minima und Maxima ausweisen. Im Spektralbereich von 400 nm bis 680 nm sollte die Differenz zwischen dem maximal auftretenden Reflexionsgrad und dem Mittelwert des Reflexionsgrades sowie die Differenz zwischen dem minimal auftretenden Reflexionsgrad und dem Mittelwert des Reflexionsgrades in einer bevorzugten Ausgestaltung höchstens 3 % betragen, besonders bevorzugt höchstens 2 %. Auch hier ist wieder der Reflexionsgrad gegenüber p-polarisierter Strahlung gemessen mit einem Einfallswinkel von 65° zur innenraumseitigen Flächennormalen heranzuziehen. Die abgegebene Differenz ist als absolute Abweichung des Reflexionsgrades (angegeben in %) zu verstehen, nicht als prozentuale Abweichung relativ zum Mittelwert. Die angegebene Glätte des Reflexionsspektrums kann mit der erfindungsgemäßen Reflexionsbeschichtung aufgrund ihrer elektrisch leitfähigen Schicht problemlos erreicht werden.

Als Maß für die Glätte des Reflexionsspektrums kann alternativ die Standardabweichung im Spektralbereich von 400 nm bis 680 nm herangezogen werden. Sie beträgt bevorzugt kleiner 1%, besonders bevorzugt kleiner 0,9 %, ganz besonders bevorzugt kleiner 0,8 %.

Die oben genannten gewünschten Reflexionscharakteristika werden insbesondere durch die Wahl der Materialien und Dicken der Einzelschichten sowie den Aufbau der dielektrischen Schichtenfolgen erreicht. Die Reflexionsbeschichtung kann so geeignet eingestellt werden.

Die Reflexionsbeschichtung ist ein Dünnschichtstapel, also eine Schichtenfolge dünner Einzelschichten. Dieser Dünnschichtstapel enthält genau eine elektrisch leitfähige Schicht auf Basis von Silber. Die elektrisch leitfähige Schicht auf Basis von Silber verleiht der Reflexionsbeschichtung die grundlegenden reflektierenden Eigenschaften und außerdem eine IR-reflektierende Wirkung und eine elektrische Leitfähigkeit. Die elektrisch leitfähige Schicht auf Basis von Silber kann auch vereinfacht als Silberschicht bezeichnet werden. Die Reflexionsbeschichtung enthält genau eine Silberschicht, also nicht mehr als eine Silberschicht, und auch oberhalb oder unterhalb der Reflexionsbeschichtung sind keine weiteren Silberschichten angeordnet. Überraschender Weise können mit einer Silberschicht die gewünschten Reflexionseigenschaften erreicht werden, ohne dass die Transmission zu stark herabgesetzt würde, wie es bei der Verwendung mehrerer leitfähiger Schichten der Fall wäre. Es können aber weitere elektrisch leitfähige Schichten vorliegen, die nicht wesentlich zur elektrischen Leitfähigkeit der Reflexionsbeschichtung beitragen, sondern einen anderen Zweck erfüllen. Dies gilt insbesondere für metallische Blockerschichten mit geometrischen Dicken von weniger als 1 nm, die bevorzugt zwischen der Silberschicht und den dielektrischen Schichtenfolgen angeordnet sind.

Die elektrisch leitfähige Schicht ist auf Basis von Silber ausgebildet. Die leitfähige Schicht enthält bevorzugt mindestens 90 Gew. % Silber, besonders bevorzugt mindestens 99 Gew. % Silber, ganz besonders bevorzugt mindestens 99,9 Gew. % Silber. Die Silberschicht kann Dotierungen aufweisen, beispielsweise Paladium, Gold, Kupfer oder Aluminium. Die geometrische Schichtdicke der Silberschicht beträgt bevorzugt höchstens 15 nm, besonders bevorzugt höchstens 14 nm, ganz besonders bevorzugt höchstens 13 nm. Dadurch kann eine vorteilhafte Reflektivität im IR-Bereich erreicht werden, ohne die Transmission zu stark herabzusetzen. Die geometrische Schichtdicke der Silberschicht beträgt bevorzugt mindestens 5 nm, besonders bevorzugt mindestens 8 nm. Dünnere Silberschichten können zu einer Entnetzung des Schichtaufbaus führen. Besonders bevorzugt beträgt die geometrische Schichtdicke der Silberschicht von 10 nm bis 14 nm oder von 11 nm bis 13 nm.

Erfindungsgemäß umfasst die Reflexionsbeschichtung keine dielektrischen Schichten, deren Brechungsindex weniger als 1,9 beträgt. Alle dielektrischen Schichten der Reflexionsbeschichtung weisen also einen Brechungsindex von mindestens 1,9 auf. Es ist ein besonderer Vorteil der vorliegenden Erfindung, dass die gewünschten Reflexionseigenschaften allein mit relativ hochbrechenden dielektrischen Schichten erreicht werden können. Da für niedrigbrechende Schichten mit einem Brechungsindex von kleiner als 1,9 insbesondere Siliziumoxid-Schichten in Frage kommen, die geringe Abscheidungsraten bei der magnetfeldunterstützten Kathodenabscheidung aufweisen, lässt sich die erfindungsgemäße Reflexionsbeschichtung so schnell und kostengünstig herstellen.

Die Reflexionsbeschichtung enthält oberhalb und unterhalb der Silberschicht unabhängig voneinander jeweils eine dielektrische Schicht oder eine dielektrische Schichtenfolge mit einem Brechungsindex von mindestens 1,9. Die dielektrischen Schichten können beispielsweise auf Basis von Siliziumnitrid, Zinkoxid, Zinn-Zink-Oxid, Silizium-Metall-Mischnitriden wie Silizium-Zirkonium-Nitrid, Zirkoniumoxid, Nioboxid, Hafniumoxid, Tantaloxid, Wolframoxid oder Siliziumkarbid ausgebildet sein. Die genannten Oxide und Nitride können stöchiometrisch, unterstöchiometrisch oder überstöchiometrisch abgeschieden sein. Sie können Dotierungen aufweisen, beispielsweise Aluminium, Zirkonium, Titan oder Bor.

Die optische Dicke der oberen dielektrischen Schicht oder Schichtenfolge beträgt bevorzugt von 100 nm bis 200 nm, besonders bevorzugt von 130 nm bis 170 nm. Die optische Dicke der unteren dielektrischen Schicht oder Schichtenfolge beträgt bevorzugt von 50 nm bis 100 nm, besonders bevorzugt von 60 nm bis 90 nm. Damit werden gute Ergebnisse erzielt.

In einer vorteilhaften Ausgestaltung ist oberhalb und unterhalb der Silberschicht jeweils eine dielektrische Schicht angeordnet, die als Entspiegelungsschicht bezeichnet werden kann und bevorzugt auf Basis eines Oxids, beispielsweise Zinnoxid, und/oder eines Nitrids, beispielsweise Siliziumnitrid, besonders bevorzugt auf Basis von Siliziumnitrid. Siliziumnitrid hat sich aufgrund seiner optischen Eigenschaften, seiner einfachen Verfügbarkeit sowie seiner hohen mechanischen und chemischen Stabilität bewährt. Das Silizium ist bevorzugt dotiert, beispielsweise mit Aluminium oder Bor. Im Falle von dielektrischen Schichtenfolgen ist die Schicht auf Basis von Siliziumnitrid bevorzugt die oberste Schicht der oberen Schichtenfolge beziehungsweise die unterste Schicht der unteren Schichtenfolge. Die geometrische Dicke der oberen Entspiegelungsschicht beträgt bevorzugt von 50 nm bis 100 nm, besonders bevorzugt von 55 nm bis 80 nm, insbesondere von 60 nm bis 70 nm. Die geometrische Dicke der unteren Entspiegelungsschicht beträgt bevorzugt von 10 nm bis 50 nm, besonders bevorzugt von 15 nm bis 40 nm, insbesondere von 20 nm bis 35 nm.

Neben der Entspiegelungsschicht können optional weitere dielektrische Schichten mit Brechungsindex von mindestens 1,9 vorhanden sein. So können die obere und untere Schichtenfolge unabhängig voneinander eine Anpassungsschicht enthalten, welche die Reflektivität der Silberschicht verbessern. Die Anpassungsschichten sind bevorzugt auf Basis von Zinkoxid ausgebildet, besonders bevorzugt Zinkoxid ZnO_{1-δ} mit 0 ≤ δ ≤ 0,01. Die Anpassungsschichten enthalten weiter bevorzugt Dotierungen. Die Anpassungsschichten können beispielsweise Aluminium-dotiertes Zinkoxid (ZnO:Al) enthalten. Das Zinkoxid wird bevorzugt unterstöchiometrisch bezüglich des Sauerstoffs abgeschieden um eine Reaktion von überschüssigem Sauerstoff mit der silberhaltigen Schicht zu vermeiden. Die Anpassungsschichten sind bevorzugt angeordnet zwischen der Silberschicht und der Entspiegelungsschicht. Die geometrische Dicke der Anpassungsschicht beträgt bevorzugt von 5 nm bis 30 nm, besonders bevorzugt von 8 nm bis 12 nm.

Es können auch brechungsindexsteigernde Schichten vorhanden sein, die einen höheren Brechungsindex aufweisen als die Entspiegelungsschicht, ebenfalls unabhängig voneinander in der oberen und der unteren Schichtenfolge. Dadurch können die optischen Eigenschaften weiter verbessert und feineingestellt werden, insbesondere die Reflexionseigenschaften. Die brechungsindexsteigernden Schichten enthalten bevorzugt ein Silizium-Metall-Mischnitrid wie Silizium-Zirkonium-Mischnitrid, Silizium-Aluminium-Mischnitrid, Silizium-Titan-Mischnitrid oder Silizium-Hafnium-Mischnitrid, besonders bevorzugt Silizium-Zirkonium-Mischnitrid. Der Anteil an Zirkonium beträgt dabei bevorzugt zwischen 15 und 45 Gew.-%, besonders bevorzugt zwischen 15 und 30 Gew.-%. Als alternative Materialien kommen beispielsweise WO₃, Nb₂O₅, Bi₂O₃, TiO₂, Zr₃N₄ und/oder AIN in Betracht. Die brechungsindexsteigernden Schichten sind bevorzugt zwischen der Entspiegelungsschicht und der Silberschicht angeordnet beziehungsweise zwischen der Anpassungsschicht (soweit vorhanden) und der Entspiegelungsschicht. Die geometrische Dicke der brechungsindexsteigernden Schicht beträgt bevorzugt von 5 nm bis 30 nm, besonders bevorzugt von 5 nm bis 15 nm.

In einer Ausgestaltung der Erfindung ist unterhalb der elektrisch leitfähigen Schicht genau eine untere dielektrische Schicht mit einem Brechungsindex von mindestens 1,9 angeordnet, bevorzugt auf Basis von Siliziumnitrid. Ebenso ist oberhalb der elektrisch leitfähigen Schicht genau eine obere dielektrische Schicht mit einem Brechungsindex von mindestens 1,9 angeordnet, bevorzugt auf Basis von Siliziumnitrid. Es ergibt sich die Schichtenfolge ausgehend vom Substrat: untere Entspiegelungsschicht - Silberschicht - obere Entspiegelungsschicht. Die Reflexionsbeschichtung enthält bevorzugt keine weiteren dielektrischen Schichten. Die geometrische Dicke der oberen Entspiegelungsschicht beträgt bevorzugt von 50 nm bis 100 nm, besonders bevorzugt von 55 nm bis 80 nm, insbesondere von 60 nm bis 70 nm. Die geometrische Dicke der unteren Entspiegelungsschicht beträgt bevorzugt von 10 nm bis 50 nm, besonders bevorzugt von 15 nm bis 40 nm, insbesondere von 20 nm bis 35 nm.

In einer weiteren Ausgestaltung der Erfindung ist unterhalb der elektrisch leitfähigen Schicht eine erste untere dielektrische Schicht (Entspiegelungsschicht) und eine zweite untere dielektrische Schicht (Anpassungsschicht) angeordnet. Ebenso ist oberhalb der elektrisch leitfähigen Schicht eine erste obere dielektrische Schicht (Entspiegelungsschicht) und eine zweite obere dielektrische Schicht (Anpassungsschicht) angeordnet. Die Entspiegelungs- und Anpassungsschichten weisen einen Brechungsindex von mindestens 1,9 auf. Die Entspiegelungsschichten sind bevorzugt auf Basis von Siliziumnitrid ausgebildet, die Anpassungsschichten auf Basis von Zinkoxid. Die Anpassungsschichten sind bevorzugt zwischen der jeweiligen Entspiegelungsschicht und der Silberschicht angeordnet: Es ergibt sich die Schichtenfolge ausgehend vom Substrat: untere Entspiegelungsschicht - untere Anpassungsschicht - Silberschicht - obere Anpassungsschicht - obere Entspiegelungsschicht. Die Reflexionsbeschichtung enthält bevorzugt keine weiteren dielektrischen Schichten. Die geometrische Dicke der oberen Entspiegelungsschicht beträgt bevorzugt von 50 nm bis 100 nm, besonders bevorzugt von 55 nm bis 80 nm, insbesondere von 60 nm bis 70 nm. Die geometrische Dicke der unteren Entspiegelungsschicht beträgt bevorzugt von 10 nm bis 50 nm, besonders bevorzugt von 15 nm bis 40 nm, insbesondere von 20 nm bis 35 nm. Die geometrische Dicke der Anpassungsschichten beträgt bevorzugt von 5 nm bis 30 nm, besonders bevorzugt von 8 nm bis 12 nm.

In einer weiteren Ausgestaltung der Erfindung ist unterhalb der elektrisch leitfähigen Schicht eine erste untere dielektrische Schicht (Entspiegelungsschicht), eine zweite untere dielektrische Schicht (Anpassungsschicht) und eine dritte untere dielektrische Schicht (brechungsindexsteigernde Schicht) angeordnet. Ebenso ist oberhalb der elektrisch leitfähigen Schicht eine erste obere dielektrische Schicht (Entspiegelungsschicht), eine zweite obere dielektrische Schicht (Anpassungsschicht) und eine dritte obere dielektrische Schicht (brechungsindexsteigernde Schicht) angeordnet. Die Entspiegelungs- und Anpassungsschichten sowie die brechungsindexsteigernden Schichten weisen einen Brechungsindex von mindestens 1,9 auf. Die brechungsindexsteigernden Schichten weisen einen höheren Brechungsindex auf als die Entspiegelungsschichten, bevorzugt mindestens 2,1. Die Entspiegelungsschichten sind bevorzugt auf Basis von Siliziumnitrid ausgebildet, die Anpassungsschichten auf Basis von Zinkoxid, die brechungsindexsteigernden Schichten auf Basis eines Silizium-Metall-Mischnitrids, wie Silizium-Zirkonium-Mischnitrid oder Silizium-Hafnium-Mischnitrid. Die Anpassungsschichten weisen bevorzugt den geringsten Abstand zur Silberschicht auf, während die brechungsindexsteigernden Schichten zwischen den Anpassungsschichten und den Entspiegelungsschichten angeordnet sind. Es ergibt sich die Schichtenfolge ausgehend vom Substrat: untere Entspiegelungsschicht - untere brechungsindexsteigernde Schicht - untere Anpassungsschicht - Silberschicht - obere Anpassungsschicht - obere brechungsindexsteigernde Schicht - obere Entspiegelungsschicht. Die Reflexionsbeschichtung enthält bevorzugt keine weiteren dielektrischen Schichten. Die geometrische Dicke der oberen Entspiegelungsschicht beträgt bevorzugt von 50 nm bis 100 nm, besonders bevorzugt von 55 nm bis 80 nm, insbesondere von 60 nm bis 70 nm. Die geometrische Dicke der unteren Entspiegelungsschicht beträgt bevorzugt von 10 nm bis 50 nm, besonders bevorzugt von 15 nm bis 40 nm, insbesondere von 20 nm bis 35 nm. Die geometrische Dicke der Anpassungsschichten beträgt bevorzugt von 5 nm bis 30 nm, besonders bevorzugt von 8 nm bis 12 nm. Die geometrische Dicke der brechungsindexsteigernden Schichten beträgt bevorzugt von 5 nm bis 30 nm, besonders bevorzugt von 5 nm bis 15 nm.

Da die obere und die untere dielektrische Schichtenfolge unabhängig voneinander ausgebildet werden können, sind auch Kombinationen der vorstehend beschriebenen Ausgestaltungen möglich, wobei die obere dielektrische Schicht/Schichtenfolge gemäß einer Ausgestaltung ausgebildet ist und die untere dielektrische Schicht/Schichtenfolge gemäß einer anderen. Es ergeben sich die folgenden bevorzugten Schichtenfolgen (jeweils ausgehend vom Substrat, also derjenigen Oberfläche, auf die die Reflexionsbeschichtung abgeschieden ist:
- untere Entspiegelungsschicht - Silberschicht - obere Entspiegelungsschicht
- untere Entspiegelungsschicht - Silberschicht - obere Anpassungsschicht - obere Entspiegelungsschicht
- untere Entspiegelungsschicht - Silberschicht - obere Anpassungsschicht - obere brechungsindexsteigernde Schicht - obere Entspiegelungsschicht
- untere Entspiegelungsschicht - untere Anpassungsschicht - Silberschicht - obere Entspiegelungsschicht
- untere Entspiegelungsschicht - untere Anpassungsschicht - Silberschicht - obere Anpassungsschicht - obere Entspiegelungsschicht
- untere Entspiegelungsschicht - untere Anpassungsschicht - Silberschicht - obere Anpassungsschicht - obere brechungsindexsteigernde Schicht - obere Entspiegelungsschicht
- untere Entspiegelungsschicht - untere brechungsindexsteigernde Schicht - untere Anpassungsschicht - Silberschicht - obere Entspiegelungsschicht
- untere Entspiegelungsschicht - untere brechungsindexsteigernde Schicht - untere Anpassungsschicht - Silberschicht - obere Anpassungsschicht - obere Entspiegelungsschicht
- untere Entspiegelungsschicht - untere brechungsindexsteigernde Schicht - untere Anpassungsschicht - Silberschicht - obere Anpassungsschicht - obere brechungsindexsteigernde Schicht - obere Entspiegelungsschicht

In einer vorteilhaften Ausgestaltung umfasst die Reflexionsbeschichtung mindestens eine metallische Blockerschicht. Die Blockerschicht kann unterhalb und/oder oberhalb der Silberschicht angeordnet sein und steht bevorzugt mit der Silberschicht in direktem Kontakt. Die Blockerschicht liegt dann zwischen Silberschicht und dielektrischer Schicht/Schichtenfolge. Die Blockerschicht dient dem Oxidationsschutz der Silberschicht insbesondere bei Temperaturbehandlungen der beschichteten Scheibe, wie sie typischerweise im Rahmen von Biegeprozessen vorkommen. Die Blockerschicht weist bevorzugt eine geometrische Dicke von weniger als 1 nm auf, beispielsweise 0,1 nm bis 0,5 nm. Die Blockerschicht ist bevorzugt auf Basis von Titan oder einer Nickel-Chrom-Legierung ausgebildet.

Die Blockerschicht ändert die optischen Eigenschaften der Reflexionsbeschichtung nur unwesentlich und ist bevorzugt bei allen vorstehend beschriebenen Ausgestaltungen vorhanden. Besonders bevorzugt ist die Blockerschicht direkt oberhalb der Silberschicht angeordnet, also zwischen Silberschicht und oberer dielektrischer Schicht(enfolge), wo sie besonders effektiv ist. Es ergeben sich folgende bevorzugte Schichtenfolgen:
- untere Entspiegelungsschicht - Silberschicht - Blockerschicht - obere Entspiegelungsschicht
- untere Entspiegelungsschicht - Silberschicht - Blockerschicht - obere Anpassungsschicht - obere Entspiegelungsschicht
- untere Entspiegelungsschicht - Silberschicht - Blockerschicht - obere Anpassungsschicht - obere brechungsindexsteigernde Schicht - obere Entspiegelungsschicht
- untere Entspiegelungsschicht - untere Anpassungsschicht - Silberschicht - Blockerschicht - obere Entspiegelungsschicht
- untere Entspiegelungsschicht - untere Anpassungsschicht - Silberschicht - Blockerschicht - obere Anpassungsschicht - obere Entspiegelungsschicht
- untere Entspiegelungsschicht - untere Anpassungsschicht - Silberschicht - Blockerschicht - obere Anpassungsschicht - obere brechungsindexsteigernde Schicht - obere Entspiegelungsschicht
- untere Entspiegelungsschicht - untere brechungsindexsteigernde Schicht - untere Anpassungsschicht - Silberschicht - Blockerschicht - obere Entspiegelungsschicht
- untere Entspiegelungsschicht - untere brechungsindexsteigernde Schicht - untere Anpassungsschicht - Silberschicht - Blockerschicht - obere Anpassungsschicht - obere Entspiegelungsschicht
- untere Entspiegelungsschicht - untere brechungsindexsteigernde Schicht - untere Anpassungsschicht - Silberschicht - Blockerschicht - obere Anpassungsschicht - obere brechungsindexsteigernde Schicht - obere Entspiegelungsschicht

Es kann jeweils optional eine zusätzliche Blockerschicht direkt unterhalb der Silberschicht angeordnet sein, also zwischen Silberschicht und unterer dielektrischer Schicht(enfolge).

Der Projektor ist innenraumseitig der Windschutzscheibe angeordnet und bestrahlt die Windschutzscheibe über die innenraumseitige Oberfläche der Innenscheibe. Er ist auf den HUD-Bereich gerichtet und bestrahlt diesen zur Erzeugung der HUD-Projektion. Die Strahlung des Projektors ist erfindungsgemäß überwiegend p-polarisiert, weist also einen p-polarisierten Strahlungsanteil von größer als 50% auf. Je höher der Anteil der p-polarisierten Strahlung an der Gesamtstrahlung des Projektors ist, desto intensitätsstärker ist das gewünschte Projektionsbild und desto intensitätsschwächer sind unerwünschte Reflexionen an den Oberflächen der Windschutzscheibe. Der p-polarisierte Strahlungsanteil des Projektors beträgt bevorzugt mindestens 70%, besonders bevorzugt mindestens 80% und insbesondere mindestens 90%. In einer besonders vorteilhaften Ausgestaltung ist die Strahlung des Projektors im Wesentlichen rein p-polarisiert - der p-polarisierte Strahlungsanteil beträgt also 100% oder weicht nur unwesentlich davon ab. Die Angabe der Polarisationsrichtung bezieht sich dabei auf die Einfallsebene der Strahlung auf der Windschutzscheibe. Mit p-polarisierter Strahlung wird eine Strahlung bezeichnet, deren elektrisches Feld in der Einfallsebene schwingt. Mit s-polarisierter Strahlung wird eine Strahlung bezeichnet, deren elektrisches Feld senkrecht zur Einfallsebene schwingt. Die Einfallsebene wird durch den Einfallsvektor und die Flächennormale der Windschutzscheibe im geometrischen Zentrum des bestrahlten Bereichs aufgespannt.

Die Strahlung des Projektors trifft bevorzugt mit einem Einfallswinkel von 45° bis 70°, insbesondere von 60° bis 70° auf die Windschutzscheibe. In einer vorteilhaften Ausgestaltung weicht der Einfallswinkel um höchstens 10° vom Brewsterwinkel ab. Die p-polarisierte Strahlung wird dann nur unwesentlich an den Oberflächen der Windschutzscheibe reflektiert, sodass kein Geisterbild erzeugt wird. Der Einfallswinkel ist der Winkel zwischen dem Einfallsvektor der Projektorstrahlung und der innenraumseitigen Flächennormale (also die Flächennormale auf die innenraumseitige externe Oberfläche der Windschutzscheibe) im geometrischen Zentrum des HUD-Bereichs. Der Brewsterwinkel für einen Luft-Glas-Übergang im Falle von Kalk-Natron-Glas, das für Fensterscheiben allgemein üblich ist, beträgt 56,5°. Idealerweise sollte der Einfallswinkel diesem Brewster-Winkel möglichst nahekommen. Es können aber beispielsweise auch Einfallswinkel von 65° verwendet werden, die für HUD-Projektionsanordnungen üblich sind, in Fahrzeugen problemlos zu realisieren sind und nur in einem geringen Maße vom Brewsterwinkel abweichen, sodass die Reflexion der p-polarisierten Strahlung nur unwesentlich zunimmt.

Da die Reflexion der Projektorstrahlung im Wesentlichen an der Reflexionsbeschichtung erfolgt und nicht an den externen Scheibenoberflächen, ist es nicht nötig, die externen Scheibenoberflächen in einem Winkel zueinander anzuordnen, um Geisterbilder zu vermeiden. Die externen Oberflächen der Windschutzscheibe sind daher bevorzugt im Wesentlichen parallel zueinander angeordnet. Die thermoplastische Zwischenschicht ist dazu bevorzugt nicht keilartig ausgebildet, sondern weist eine im Wesentlichen konstante Dicke auf, insbesondere auch im vertikalen Verlauf zwischen der Oberkante und der Unterkante der Windschutzscheibe, ebenso wie die Innenscheibe und die Außenscheibe. Eine keilartige Zwischenschicht würde dagegen im vertikalen Verlauf zwischen Unterkante und Oberkante der Windschutzscheibe eine veränderliche, insbesondere zunehmende Dicke aufweisen. Die Zwischenschicht ist typischerweise aus mindestens einer thermoplastischen Folie ausgebildet. Da Standardfolien deutlich kostengünstiger sind als Keilfolien, wird die Herstellung der Windschutzscheibe günstiger gestaltet.

Die Außenscheibe und die Innenscheibe sind bevorzugt aus Glas gefertigt, insbesondere aus Kalk-Natron-Glas, was für Fensterscheiben üblich ist. Die Scheiben können grundsätzlich aber auch aus anderen Glasarten (beispielsweise Borosilikatglas, Quarzglas, Aluminosilikatglas) oder transparenten Kunststoffen (beispielsweise Polymethylmethacrylat oder Polycarbonat) gefertigt sein. Die Dicke der Außenscheibe und der Innenscheibe kann breit variieren. Vorzugsweise werden Scheiben mit einer Dicke im Bereich von 0,8 mm bis 5 mm, bevorzugt von 1,4 mm bis 2,5 mm verwendet, beispielsweise die mit den Standarddicken 1,6 mm oder 2,1 mm.

Die Außenscheibe, die Innenscheibe und die thermoplastische Zwischenschicht können klar und farblos, aber auch getönt oder gefärbt sein. Die Gesamttransmission durch Windschutzscheibe (samt Reflexionsbeschichtung) beträgt in einer bevorzugten Ausgestaltung größer 70%. Der Begriff Gesamttransmission bezieht sich auf das durch ECE-R 43, Anhang 3, § 9.1 festgelegte Verfahren zur Prüfung der Lichtdurchlässigkeit von Kraftfahrzeugscheiben. Die Außenscheibe und die Innenscheiben können unabhängig voneinander nicht vorgespannt, teilvorgespannt oder vorgespannt sein. Soll mindestens eine der Scheiben eine Vorspannung aufweisen, so kann dies eine thermische oder chemische Vorspannung sein.

In einer vorteilhaften Ausgestaltung ist die Außenscheibe getönt oder gefärbt. Dadurch kann die außenseitige Reflekivität der Windschutzscheibe verringert werden, wodurch der Eindruck der Scheibe angenehmer gestaltet wird für einen äußeren Betrachter. Um allerdings die vorgeschriebene Lichttransmission von 70% für Windschutzscheiben zu gewährleisten (Gesamttransmission), sollte die Außenscheibe bevorzugt eine Lichttransmission von mindestens 80% aufweisen, besonders bevorzugt von mindestens 85%. Die Innenscheibe und die Zwischenschicht sind bevorzugt klar, also nicht getönt oder gefärbt. Beispielsweise kann grün oder blau gefärbtes Glas als Außenscheibe eingesetzt werden.

Die Windschutzscheibe ist bevorzugt in einer oder in mehreren Richtungen des Raumes gebogen, wie es für Kraftfahrzeugscheiben üblich ist, wobei typische Krümmungsradien im Bereich von etwa 10 cm bis etwa 40 m liegen. Die Windschutzscheibe kann aber auch plan sein, beispielsweise wenn es als Scheibe für Busse, Züge oder Traktoren vorgesehen ist.

Die thermoplastische Zwischenschicht enthält zumindest ein thermoplastisches Polymer, bevorzugt Ethylenvinylacetat (EVA), Polyvinylbutyral (PVB) oder Polyurethan (PU) oder Gemische oder Copolymere oder Derivate davon, besonders bevorzugt PVB. Die Zwischenschicht ist typischerweise aus einer thermoplastischen Folie ausgebildet. Die Dicke der Zwischenschicht beträgt bevorzugt von 0,2 mm bis 2 mm, besonders bevorzugt von 0,3 mm bis 1 mm.

Die Erfindung umfasst des Weiteren ein Verfahren zur Herstellung einer Windschutzscheibe für eine erfindungsgemäße Projektionsanordnung.

Dabei wird zunächst eine Reflexionsbeschichtung auf der Innenscheibe oder auf der Außenscheibe aufgetragen. Die Reflexionsbeschichtung wird bevorzugt durch physikalische Gasphasenabscheidung (PVD) auf eine Scheibenoberfläche aufgebracht, besonders bevorzugt durch Kathodenzerstäubung ("Sputtern"), ganz besonders bevorzugt durch magnetfeldunterstütze Kathodenzerstäubung ("Magnetronsputtern"). Die Beschichtung wird bevorzugt vor der Lamination aufgebracht, besonders bevorzugt bereits vor dem Zuschneiden der Einzelscheiben. Statt die Reflexionsbeschichtung auf eine Scheibenoberfläche aufzubringen, kann sie grundsätzlich auch auf einer Trägerfolie bereitgestellt werden, die in der Zwischenschicht angeordnet wird.

Im nachfolgenden Schritt werden die Innenscheibe und die Außenscheibe gemeinsam (d.h. zeitgleich und durch dasselbe Werkzeug) kongruent gebogen, weil dadurch die Form der Scheiben für die später erfolgende Laminierung optimal aufeinander abgestimmt sind. Typische Temperaturen für Glasbiegeprozesse betragen beispielsweise 500°C bis 700°C. Diese Temperaturbehandlung erhöht auch die Transparenz und verringert den Flächenwiderstand der Reflexionsbeschichtung.

Die Heizdrähte werden in die thermoplastische Zwischenschicht integriert, wobei die Drähte bevorzugt zunächst erwärmt und nachfolgend in die Oberfläche der Folie eingetragen werden. Zur Eintragung der Heizdrähte in die Oberfläche der thermoplastischen Zwischenschicht sind neben den meist verwendeten Plotterverfahren auch Trommelverfahren geeignet. Im Plotterverfahren führt eine Spitze den Draht schleifenförmig über die thermoplastische Zwischenschicht, wobei die erwärmten Drähte zumindest anteilig in die Oberfläche der thermoplastischen Zwischenschicht einsinkt. Im Trommelverfahren werden hingegen mehrere erwärmte Einzeldrähte mittels einer Trommel in die Oberfläche der thermoplastischen Zwischenschicht eingedrückt. Alternativ können die Drähte beispielsweise auch mittels Druckverfahren auf die Oberfläche der thermoplastischen Zwischenschicht appliziert werden.

Die in die thermoplastische Zwischenschicht eingebrachten Heizdrähte werden im Randbereich der Scheibe über mehrere elektrische Leiter kontaktiert. Die elektrischen Leiter werden dazu bevorzugt durch Löten mit den Heizdrähten verbunden. Die thermoplastische Zwischenschicht mit Heizdrähten und elektrischen Leitern wird anschließend zwischen der Außenscheibe und der Innenscheibe eingelegt. Bevorzugt werden ummantelte Drähte verwendet, sodass beim Einlegen der thermoplastischen Zwischenschicht die Heizdrähte auch der Reflexionsbeschichtung zugewandt sein können.

In einem letzten Schritt erfolgt die Herstellung der Windschutzscheibe in einem Laminationsverfahren. Die Verbindung von Außenscheibe und Innenscheibe erfolgt dabei üblicherweise unter Einwirkung von Hitze, Vakuum und/oder Druck. Dies kann durch an sich bekannte Verfahren erfolgen. Die Außenscheibe und die Innenscheibe werden über die Zwischenschicht miteinander laminiert, beispielsweise durch Autoklavverfahren, Vakuumsackverfahren, Vakuumringverfahren, Kalanderverfahren, Vakuumlaminatoren oder Kombinationen davon.

Beispielsweise erfolgt die Herstellung in einem Autoklavverfahren, wobei die Scheibenanordnung unter Vakuum im Ofen schrittweise erwärmt wird. Dabei wird die Scheibe erst 6 Minuten bis zu einer Temperatur von 50 °C aufgeheizt, dann 25 Minuten bei einer Temperatur von 100 °C gehalten und anschließend wieder über 6 Minuten auf 50 °C abgekühlt und bei dieser Temperatur gehalten. Die entstandene Vorverbundscheibe wird daraufhin autoklaviert. Die Behandlung im Autoklaven erfolgt bei 100 °C bis 150 °C, bevorzugt 115 °C bis 145 °C und bei einem Druck von 10 bar bis 15 bar für einen Zeitraum von 1 Stunde bis 4 Stunden, bevorzugt 2 Stunden bis 3 Stunden.

Gezeigt ist weiter die Verwendung einer erfindungsgemäßen Projektionsanordnung als HUD in einem Kraftfahrzeug, insbesondere einem Personenkraftwagen oder Lastkraftwagen.

Im Folgenden wird die Erfindung anhand einer Zeichnung und Ausführungsbeispielen näher erläutert. Die Zeichnung ist eine schematische Darstellung und nicht maßstabsgetreu. Die Zeichnung schränkt die Erfindung in keiner Weise ein.

Es zeigen:
- Fig. 1: eine Draufsicht auf eine Windschutzscheibe einer erfindungsgemäßen Projektionsanordnung,
- Fig. 2: einen Querschnitt durch eine erfindungsgemäße Projektionsanordnung,
- Fig. 3: einen Querschnitt durch die Windschutzscheibe aus Figur 1 entlang der Linie A - A'.
- Fig. 4: Reflexionsspektren von Verbundscheiben gegenüber p-polarisierter Strahlung gemäß den Beispielen 1 und 2 und dem Vergleichsbeispiel 1,
- Fig. 5: Reflexionsspektren von Verbundscheiben gegenüber p-polarisierter Strahlung gemäß dem Beispiel 3 und dem Vergleichsbeispiel 2 und
- Fig. 6: Reflexionsspektren von Verbundscheiben gegenüber p-polarisierter Strahlung gemäß den Beispielen 4 und 5 und den Vergleichsbeispielen 3 und 4.

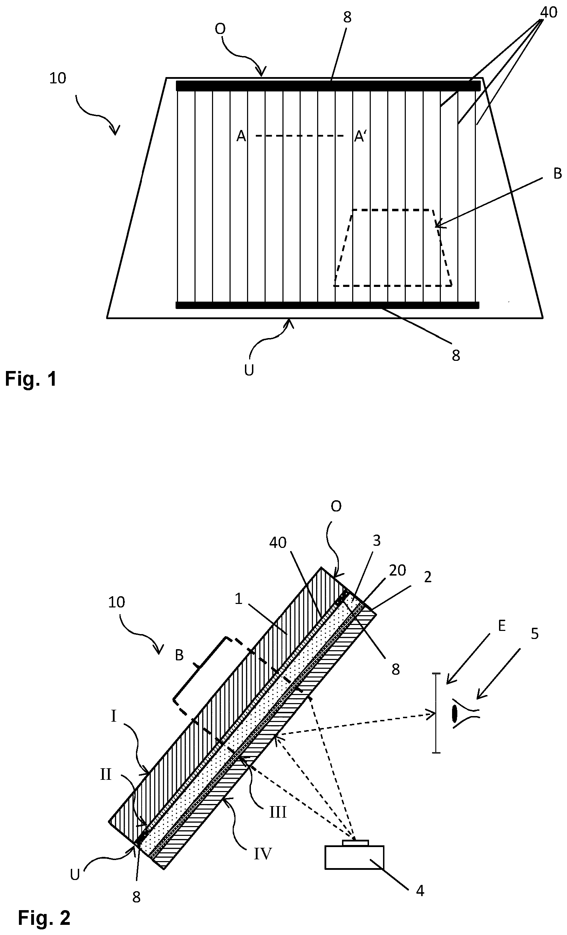

Fig. 1 und Fig. 2 zeigen je ein Detail einer erfindungsgemäßen Projektionsanordnung für ein HUD. Die Projektionsanordnung umfasst eine Windschutzscheibe 10, insbesondere die Windschutzscheibe eines Personenkraftwagens. Die Projektionsanordnung umfasst außerdem einen Projektor 4, welcher auf einen Bereich der Verbundscheibe 10 gerichtet ist. In diesem Bereich, der üblicherweise als HUD-Bereich B bezeichnet wird, können durch den Projektor 4 Bilder erzeugt werden, welche von einem Betrachter 5 (Fahrzeugfahrer) als virtuelle Bilder auf der von ihm abgewandten Seite der Verbundscheibe 10 wahrgenommen werden, wenn sich seine Augen innerhalb der sogenannten Eyebox E befinden.

Die Windschutzscheibe 10 ist aufgebaut aus einer Außenscheibe 1 und einer Innenscheibe 2, die über eine thermoplastische Zwischenschicht 3 miteinander verbunden sind. Ihre Unterkante U ist nach unten in Richtung des Motors des Personenkraftwagens angeordnet, ihre Oberkante O nach oben in Richtung des Dachs. Die Außenscheibe 1 ist in Einbaulage der äußeren Umgebung zugewandt, die Innenscheibe 2 dem Fahrzeuginnenraum.

Fig. 2 zeigt ein Querschnitt einer erfindungsgemäß ausgebildeten Windschutzscheibe 10. Die Außenscheibe 1 weist eine außenseitige Oberfläche I auf, die in Einbaulage der äußeren Umgebung zugewandt ist, und eine innenraumseitige Oberfläche II, die in Einbaulage dem Innenraum zugewandt ist. Ebenso weist die Innenscheibe 2 eine außenseitige Oberfläche III auf, die in Einbaulage der äußeren Umgebung zugewandt ist, und eine innenraumseitige Oberfläche IV, die in Einbaulage dem Innenraum zugewandt ist. Die Außenscheibe 1 und die Innenscheibe 2 bestehen beispielsweise aus Kalk-Natron-Glas. Die Außenscheibe 1 weist beispielsweise eine Dicke von 2,1 mm auf, die Innenscheibe 2 eine Dicke von 1,6 mm oder 2,1 mm. Die thermoplastische Zwischenschicht 3 ist beispielsweise aus einer PVB-Folie ausgebildet mit einer Dicke von 0,76 mm. Die PVB-Folie weist eine im Wesentlichen konstante Dicke auf, abgesehen von einer etwaigen fachüblichen Oberflächenrauigkeit - sie ist nicht als sogenannte Keilfolie ausgebildet.

Die außenseitige Oberfläche III der Innenscheibe 2 ist mit einer erfindungsgemäßen Reflexionsbeschichtung 20 versehen, die als Reflexionsfläche für die Projektorstrahlung (und eventuell zusätzlich als IR-reflektierende Beschichtung) vorgesehen ist. Die Anordnung auf der Innenscheibe führt zu einem optisch besonders guten HUD-Bild, weil keine Beeinträchtigungen durch Drähte oder Zwischenschichten auftreten.

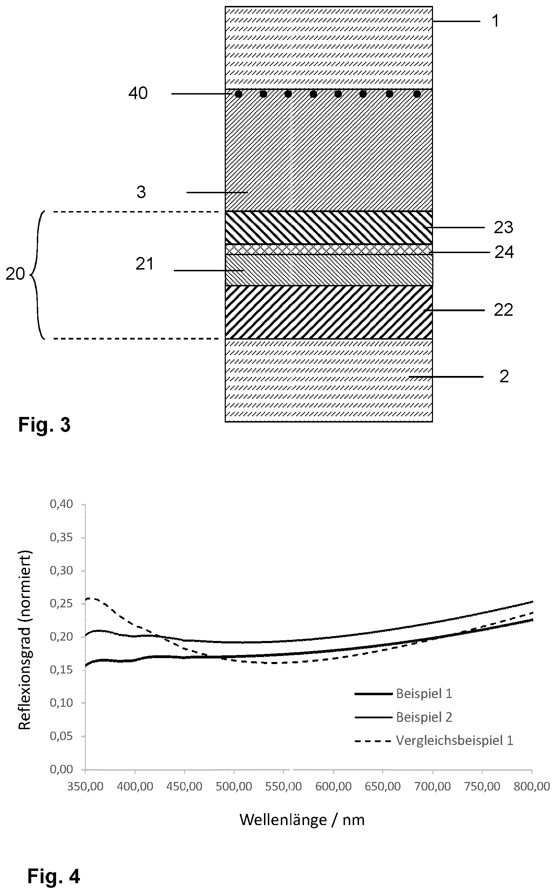

In die thermoplastische Zwischenschicht 3 sind Heizdrähte 40 eingebettet. Diese sind auf der zur Außenscheibe 1 weisenden Seite der thermoplastischen Zwischenschicht 3 in die Oberfläche der thermoplastischen Zwischenschicht eingebettet, wie in Fig. 2 und 3 dargestellt ist. Durch die Nähe zur Außenscheibe kann diese besonders effektiv beheizt werden. Die Heizdrähte sind beispielsweise Wolframdrähte mit einem Durchmesser von 20 µm und einem Widerstand von 230 Ohm/m.

Wie in Fig. 1 schematisch dargestellt, verlaufen die Heizdrähte 40 von der Oberkante zur Unterkante senkrecht zu diesen über den Sichtbereich der Windschutzscheibe. Die einzelnen Heizdrähte sind in einem Abstand von 2 mm bis 3,5 mm verlegt, um eine homogene Aufheizung der Scheibenfläche zu erreichen. Sie sind real im Verhältnis zu den elektrischen Leitern 8 auch viel dünner, als es in der Zeichnung dargestellt ist. Durch Variation der Abstände können jedoch die verfügbaren Flächen-Heizleistungen bei gegebenem Drahtwiderstand nach Bedarf eingestellt werden. Ferner werden hier vereinfachend nur geradlinig verlegte Drähte gezeigt. In der Praxis sind die Drähte jedoch in der üblichen Weise leicht "gekräuselt", d. h. sinusförmig mit kleinen Wellenlängen und Amplituden verlegen, da diese optisch weitaus weniger auffällig sind (insbesondere Lichtbeugungseffekte reduzieren).

Gemäß Fig. 1 ist ein etwa rechteckiges Heizfeld mit einer Schar von geradlinig parallel zueinander verlegten Heizdrähten 40 eingebettet. Die Heizdrähte 40 sind entlang der oberen Kante und der unteren Kante der Scheibe mit elektrischen Leitern 8 verbunden. In der Realität werden auch die seitlichen Dreiecke von Heizfeldern mit Heizdrähten beheizt, was der Einfachheit halber in der Figur nicht dargestellt ist. Genaue Arrangements der Heizdrähte und elektrischen Leiter sind dem Fachmann aus dem Stand der Technik bekannt, sodass hier nicht weiter darauf eingegangen wird. Die elektrischen Leiter 8 bestehen zum Beispiel aus dünnen und schmalen Metallfolienstreifen aus Kupfer und sind mit den Heizdrähten verlötet. Die Kupferstreifen haben im Vergleich mit den Heizdrähten vernachlässigbare ohmsche Widerstände und heizen sich im Betrieb der Heizung nicht nennenswert auf. Die elektrischen Leiter 8 können in bekannter Weise mit Außenanschlüssen versehen werden um dann mit einer Spannungsquelle, verbunden zu werden, wie zum Beispiel mit der üblichen Kraftfahrzeugbordspannung von 14 Volt Gleichstrom.

Der Strahlung des Projektors 4 ist erfindungsgemäß p-polarisiert, insbesondere im Wesentlichen rein p-polarisiert. Da der Projektor 4 die Windschutzscheibe 10 mit einem Einfallswinkel von etwa 65° bestrahlt, der nahe dem Brewster-Winkel liegt, wird die Strahlung des Projektors nur unwesentlich an den externen Oberflächen I, IV der Verbundscheibe 10 reflektiert. Die erfindungsgemäße Reflexionsbeschichtung 20 dagegen ist auf die Reflexion p-polarisierter Strahlung optimiert. Sie dient als Reflexionsfläche für die Strahlung des Projektors 4 zur Erzeugung der HUD-Projektion.

Fig. 3 zeigt die Schichtenfolge einer Ausgestaltung einer erfindungsgemäßen Windschutzscheibe 10 entlang der Schnittlinie A - A' in Figur 1. Auf der Außenseite der Innenscheibe 2 ist die Reflexionsbeschichtung 20 angeordnet in Form eines Stapels von Dünnschichten. Die Reflexionsbeschichtung 20 umfasst eine elektrisch leitfähige Schicht 21 auf Basis von Silber. Direkt oberhalb der elektrisch leitfähigen Schicht 21 ist eine metallische Blockerschicht 24 angeordnet. Darüber ist eine obere dielektrische Schichtenfolge 23 angeordnet. Unterhalb der elektrisch leitfähigen Schicht 21 ist eine untere dielektrische Schichtenfolge 22 angeordnet.

Angrenzend an die Innenseite der Außenscheibe 1 sind Heizdrähte 40 in die thermoplastische Zwischenschicht 3 eingebettet. Die Innenscheibe 2 und die Außenscheibe 1 sind über die thermoplastische Zwischenschicht 3 verbunden.

Die dargestellten Schichtdicken sind nicht maßstabsgerecht. So ist zum Beispiel die Dicke der Scheiben 1 und 2 und die Dicke der thermoplastischen Zwischenschicht 3 viel zu klein im Vergleich zu den Dünnschichten dargestellt. Der dargestellte Aufbau ist zudem lediglich beispielhaft zu versehen. So können die Blockerschichten vorhanden sein oder nicht sowie ober- und / oder unterhalb der elektrisch leitfähigen Schichten angeordnet sein. Die dielektrischen Schichtenfolgen können jeweils eine einzige dielektrische Schicht oder auch mehrere Schichten umfassen, solange mindestens eine dielektrische Schicht oberhalb und unterhalb der leitfähigen Schicht 21 vorhanden ist. Beispielhafte Materialien und Schichtdicken können den nachfolgenden Beispielen entnommen werden.

Die Schichtenfolgen einer Windschutzscheibe 10 mit der Reflexionsbeschichtung 20 auf der außenseitigen Oberfläche III der Innenscheibe 2 gemäß der erfindungsgemäßen Beispiele 1 bis 5 sind, zusammen mit den Materialien und geometrische Schichtdicken der Einzelschichten, in Tabelle 1 dargestellt. Die dielektrischen Schichten können unabhängig voneinander dotiert sein, beispielsweise mit Bor oder Aluminium. Alle Scheiben der Beispiele und der Vergleichsbeispiele wurden mit 20 µm dicken Wolframdrähten 40 mit einem Abstand zwischen den Drähten im HUD-Bereich von 3 mm auf der zur Außenscheibe weisenden Seite der thermoplastischen Zwischenschicht 3 versehen.

**Tabelle 1**

| Material | Bezugszeichen | | Schichtdicke | | | | |
|---|---|---|---|---|---|---|---|
| | | | Beispiel 1 | Beispiel 2 | Beispiel 3 | Beispiel 4 | Beispiel 5 |
| Kalk-Natron-Glas | 1 | | 2,1 mm | 2,1 mm | 2,1 mm | 2,1 mm | 2,1 mm |
| PVB | 3 | | 0,76 mm | 0,76 mm | 0,76 mm | 0,76 mm | 0,76 mm |
| SiN | 20 | 23 | 70 nm | 70 nm | 60 nm | 60 nm | 60 nm |
| SiZrN | | | - | - | - | 10 nm | 10 nm |
| ZnO | | | - | - | 10 nm | 10 nm | 10 nm |
| NiCr | | 24 | 0,3 nm | 0,3 nm | 0,3 nm | 0,3 nm | 0,3 nm |
| **Ag** | | **21** | **11 nm** | **12 nm** | **12 nm** | **11 nm** | **13 nm** |
| ZnO | | 22 | - | - | 10 nm | 10 nm | 10 nm |
| SiZrN | | | - | - | - | 10 nm | 10 nm |
| SiN | | | 30 nm | 35 nm | 25 nm | 20 nm | 20 nm |
| Kalk-Natron-Glas | 2 | | 2,1 mm | 2,1 mm | 2,1 mm | 2,1 mm | 2,1 mm |

Zum Vergleich wurden Vergleichsbeispiele 1 bis 4 untersucht, die nicht die erfindungsgemäßen Merkmale erfüllen. Ihre Schichtenfolgen sind in Tabelle 2 dargestellt.

**Tabelle 2**

| Material | Bezugszeichen | | Schichtdicke | | | |
|---|---|---|---|---|---|---|
| | | | Vergleichsbeispiel 1 | Vergleichsbeispiel 2 | Vergleichsbeispiel 3 | Vergleichsbeispiel 4 |
| Kalk-Natron-Glas | 1 | | 2,1 mm | 2,1 mm | 2,1 mm | 2,1 mm |
| PVB | 3 | | 0,76 mm | 0,76 mm | 0,76 mm | 0,76 mm |
| SiN | 20 | 23 | 50 nm | 35 nm | 30 nm | 40 nm |
| SiZrN | | | - | - | 10 nm | 10 nm |
| ZnO | | | - | 10 nm | 10 nm | 10 nm |
| NiCr | | 24 | 0,3 nm | 0,3 nm | 0,3 nm | 0,3 nm |
| **Ag** | | **21** | **12 nm** | **13 nm** | **13 nm** | **13 nm** |
| ZnO | | 22 | - | 10 nm | 10 nm | 10 nm |
| SiZrN | | | - | - | 10 nm | 10 nm |
| SiN | | | 50 nm | 35 nm | 50 nm | 40 nm |
| Kalk-Natron-Glas | 2 | | 2,1 mm | 2,1 mm | 2,1 mm | 2,1 mm |

Die Beispiele und die Vergleichsbeispiele unterscheiden sich in erster Linie durch das Verhältnis der optischen Dicke der oberen dielektrischen Schichtenfolge zur optischen Dicke der unteren dielektrischen Schichtenfolge. Die optische Dicke ergibt sich jeweils als Produkt aus der in den Tabellen 1 und 2 dargestellten geometrischen Dicke und dem Brechungsindex (SiN: 2,0; SiZrN: 2,2, ZnO: 2,0). Die optischen Dicken und ihr Verhältnis sind in Tabelle 3 zusammengefasst. Das Verhältnis ϕ beschreibt das Verhältnis der optischen Dicke der oberen dielektrischen Schichtenfolge 23 zur optischen Dicke der unteren dielektrischen Schichtenfolge 22.

**Tabelle 3**

| | optische Dicke der oberen dielektrischen Schichtenfolge | optische Dicke der unteren dielektrischen Schichtenfolge | Verhältnis ϕ |
|---|---|---|---|
| Beispiel 1 | 140 | 60 | 2,33 |
| Beispiel 2 | 140 | 70 | 2,00 |
| Beispiel 3 | 140 | 70 | 2,00 |
| Beispiel 4 | 162 | 82 | 1,98 |
| Beispiel 5 | 162 | 82 | 1,98 |
| Vergleichsbeispiel 1 | 100 | 100 | 1,00 |
| Vergleichsbeispiel 2 | 90 | 90 | 1,00 |
| Vergleichsbeispiel 3 | 102 | 142 | 0,72 |
| Vergleichsbeispiel 4 | 122 | 122 | 1,00 |
| | | | |
| | | | |

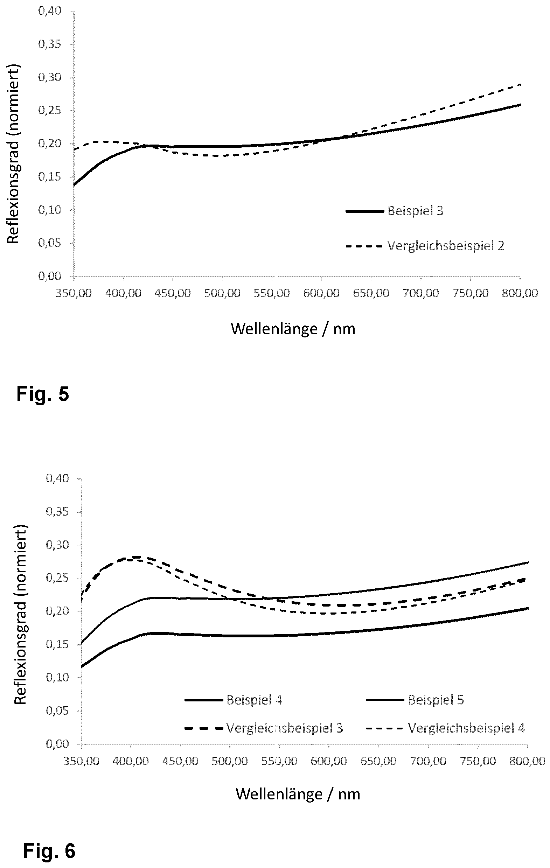

Fig. 4, Fig. 5 und Fig. 6 zeigen Reflexionsspektren von Verbundscheibe 10 wie in Figur 3, jeweils mit einem Schichtaufbau gemäß der erfindungsgemäßen Beispiele 1 bis 5 nach Tabelle 1 sowie gemäß der Vergleichsbeispiele 1 bis 4 nach Tabelle 2. Die Reflexionsspektren wurden mit einer Lichtquelle, die im betrachteten Spektralbereich p-polarisierte Strahlung gleichmäßiger Intensität ausstrahlt, aufgenommen, bei Bestrahlung über die Innenscheibe 2 (die sogenannte innenraumseitige Reflexion) unter einem Einstrahlwinkel von 65° zur innenraumseitigen Flächennormalen. Die Reflexionsmessung ist also der Situation in der Projektionsanordnung angenähert. Der besseren Übersichtlichkeit halber sind jeweils die Beispiele und Vergleichsbeispiele zusammengefasst, die einen ähnlichen Schichtaufbau aufwiesen. In Figur 4 sind die Beispiele 1 und 2 und das Vergleichsbeispiel 1 dargestellt, die jeweils nur über einzelne dielektrische Entspiegelungsschichten verfügen. In Figur 5 sind das Beispiel 3 und das Vergleichsbeispiel 2 dargestellt, die jeweils über dielektrische Entspiegelungsschichten und Anpassungsschichten verfügen. In Figur 6 sind die Beispiele 4 und 5 und die Vergleichsbeispiele 3 und 4 dargestellt, die jeweils über dielektrische Entspiegelungsschichten, Anpassungsschichten und brechungsindexsteigernde Schichten verfügen.

Bereits aus der graphischen Darstellung der Spektren ist ersichtlich, dass die erfindungsgemäßen Beispiele mit dem erfindungsgemäßen Verhältnis der optischen Dicken von oberer und unterer dielektrischer Schicht beziehungsweise Schichtenfolge zu einem wesentlich glatteren Spektrum im interessierenden Spektralbereich von 400 nm bis 680 nm führen. Dadurch wird eine farbneutralere Darstellung der HUD-Projektion sichergestellt. Außerdem wird der generelle Farbeindruck der Scheibe verbessert.

Der gemittelte Reflexionsgrad gegenüber p-polarisierter Strahlung sowie die Differenzen der Maximal- und Minimalwerte zum gemittelten Reflexionsgrad der Beispiele 1 bis 5 sind in Tabelle 4 zusammengefasst, die entsprechenden Werte für die Vergleichsbeispiel 1 und 2 in Tabelle 5. Außerdem ist jeweils die Standardabweichung des Reflexionsspektrums angegeben. Die Analysen beziehen sich jeweils auf den Spektralbereich von 400 nm bis 680 nm.

**Tabelle 4**

| | Beispiel 1 | Beispiel 2 | Beispiel 3 | Beispiel 4 | Beispiel 5 |
|---|---|---|---|---|---|
| gemittelten Reflexionsgrad gegenüber p-polarisierter Strahlung, 400 nm-680 nm | 17,6% | 19,9% | 20,2% | 16,6% | 22,3% |
| Differenz zwischen dem maximal auftretenden Reflexionsgrad und dem Mittelwert | 1,8% | 1,7% | 2,0% | 1,1% | 1,6% |
| Differenz zwischen dem minimal auftretenden Reflexionsgrad und dem Mittelwert | 1,1% | 0,7% | 1,5% | 0,9% | 1,3% |
| Standardabweichung, 400 nm-680 nm | 0,55% | 0,48% | 0,60% | 0,27% | 0,62% |

**Tabelle 5**

| | Vergleichsbeispiel 1 | Vergleichsbeispiel 2 | Vergleichsbeispiel 3 | Vergleichsbeispiel 4 |
|---|---|---|---|---|
| gemittelten Reflexionsgrad gegenüber p-polarisierter Strahlung, 400 nm-680 nm | 17,6% | 19,8% | 23,1% | 22,0% |
| Differenz zwischen dem maximal auftretenden Reflexionsgrad und dem Mittelwert | 4,2% | 3,6% | 5,1% | 5,8% |
| Differenz zwischen dem minimal auftretenden Reflexionsgrad und dem Mittelwert | 1,4% | 1,6% | 2,2% | 2,3% |
| Standardabweichung, 400 nm-680 nm | 1,49% | 1,11% | 2,52% | 2,70% |

Bei den Vergleichsbeispielen sind zwar auch relativ hohe gemittelte Reflexionswerte erreichbar, jedoch sind die Spektren im relevanten Spektralbereich von 400 nm bis 680 nm starken Schwankungen unterworfen, was zu unerwünschten Farbverschiebungen des HUD-Bildes führen kann sowie zu einem schlechteren Farbeindruck der Scheibe für den Betrachter. Im Gegensatz dazu bewirkt das Verhältnis der optischen Dicken von unterer und oberer dielektrischer Schicht/Schichtenfolge der erfindungsgemäßen Beispiele eine deutliche Glättung des Reflexionsspektrums, was zu einer farbneutraleren Widergabe des Projektorbildes und einem farbneutraleren Gesamteindruck führt.

Alle Scheiben wiesen eine Lichttransmission von größer als 70% auf, sodass sie als Windschutzscheibe eingesetzt werden können. Dank der erfindungsgemäßen Heizdrähte konnten die Scheiben beheizt werden und somit die Darstellung des HUD-Bildes unabhängig von der Außentemperatur sicherstellen. Es wurden keinerlei störende Reflektionen durch die Wolframdrähte festgestellt, sodass sich überraschenderweise die Heizfunktion und die Beschichtung für die HUD-Projektion in einer Scheibe erfolgreich kombinieren lassen.

Es wurden auch Versuche durchgeführt mit einer Windschutzscheibe mit grün gefärbtem Außenglas. Die Reflexionsbeschichtung entsprach im Wesentlichen dem Beispiel 1, wobei lediglich die obere Entspiegelungsschicht 23a etwas dünner ausgebildet war (60 nm statt 70 nm). Die außenseitige Reflexion konnte deutlich reduziert werden (um 3-4% bei Beobachtungswinkeln von 8° und 60°, integrale Reflexion).

### Bezugszeichenliste:

- 10: Windschutzscheibe

- 1: Außenscheibe
- 2: Innenscheibe
- 3: thermoplastische Zwischenschicht
- 4: Projektor
- 5: Betrachter / Fahrzeugfahrer
- 20: Reflexionsbeschichtung
- 21: elektrisch leitfähige Schicht
- 22: untere dielektrische Schichtenfolge
- 23: obere dielektrische Schichtenfolge
- 24: metallische Blockerschicht

- O: Oberkante der Windschutzscheibe 10
- U: Unterkante der Windschutzscheibe 10
- B: HUD-Bereich der Windschutzscheibe 10
- E: Eyebox

- I: außenseitige, von der Zwischenschicht 3 abgewandte Oberfläche der Außenscheibe 1
- II: innenraumseitige, zur Zwischenschicht 3 hingewandte Oberfläche der Außenscheibe 1
- III: außenseitige, zur Zwischenschicht 3 hingewandte Oberfläche der Innenscheibe 2
- IV: innenraumseitige, von der Zwischenschicht 3 abgewandte Oberfläche der Innenscheibe 2

## Patentansprüche

1. Projektionsanordnung für ein Head-Up-Display (HUD), umfassend
- eine Windschutzscheibe (10), umfassend eine Außenscheibe (1) und eine Innenscheibe (2), die über eine thermoplastische Zwischenschicht (3) miteinander verbunden sind, mit einem HUD-Bereich (B), wobei Heizdrähte (40) zwischen der Außenscheibe (1) und der Innenscheibe (2) angeordnet sind,
- einen Projektor (4), der auf den HUD-Bereich (B) gerichtet ist, wobei die Strahlung des Projektors (4) überwiegend p-polarisiert ist,
wobei die Windschutzscheibe (10) mit einer Reflexionsbeschichtung (20) versehen ist, die geeignet ist, p-polarisierte Strahlung zu reflektieren, wobei
- die Reflexionsbeschichtung (20) genau eine elektrisch leitfähige Schicht (21) auf Basis von Silber aufweist,
- unterhalb der elektrisch leitfähigen Schicht (21) genau eine untere dielektrische Schicht (22) oder eine Schichtenfolge (22) angeordnet ist, deren Brechungsindex mindestens 1,9 beträgt,
- oberhalb der elektrisch leitfähigen Schicht (21) genau eine obere dielektrische Schicht (23) oder eine Schichtenfolge (23) angeordnet ist, deren Brechungsindex mindestens 1,9 beträgt,
wobei alle dielektrischen Schichten der Reflexionsbeschichtung (20) einen Brechungsindex von mindestens 1,9 haben, wobei Brechungsindizes auf eine Wellenlänge von 550 nm bezogen und mittels Ellipsometrie bestimmt sind,
und wobei
- das Verhältnis der optischen Dicke der genau einen oberen dielektrischen Schicht (23) oder der Schichtenfolge (23) zur optischen Dicke der genau einen unteren dielektrischen Schicht (22) oder der Schichtenfolge (22) mindestens 1,7 beträgt, wobei die optische Dicke einer Schicht das Produkt aus deren geometrischer Dicke und dem Brechungsindex bei 550 nm ist und die optische Dicke einer Schichtenfolge die Summe der optischen Dicken der Einzelschichten ist.

2. Projektionsanordnung nach Anspruch 1, wobei die Reflexionsbeschichtung (20) auf der zur thermoplastischen Zwischenschicht (3) weisenden Außenseite (III) der Innenscheibe (2) angeordnet ist und die Heizdrähte (40) zwischen Außenscheibe (1) und Reflexionsbeschichtung (20) angeordnet sind.

3. Projektionsanordnung nach Anspruch 1, wobei die Reflexionsbeschichtung (20) auf der zur thermoplastischen Zwischenschicht (3) weisenden Innenseite (II) der Außenscheibe (1) angeordnet ist und die Heizdrähte (40) zwischen Reflexionsbeschichtung (20) und Innenscheibe (2) angeordnet sind.

4. Projektionsanordnung nach Anspruch 1, wobei die Reflexionsbeschichtung (20) auf der Innenseite (IV) der Innenscheibe (2) angeordnet ist und die Heizdrähte (40) zwischen der Außenscheibe (1) und der Innenscheibe (2) angeordnet sind.

5. Projektionsanordnung nach einem der Ansprüche 1 bis 4, wobei die Heizdrähte (40) auf der zur Innenscheibe (2) weisenden Seite in die thermoplastische Zwischenschicht (3) eingebettet sind oder auf der zur Außenscheibe (1) weisenden Seite in die thermoplastische Zwischenschicht (3) eingebettet sind, bevorzugt auf der zur Außenscheibe (1) weisenden Seite in die thermoplastische Zwischenschicht (3) eingebettet sind.

6. Projektionsanordnung nach einem der Ansprüche 1 bis 5, wobei die Heizdrähte (40) auf Basis eines Metalls, bevorzugt aus Wolfram, Kupfer oder Silber ausgeführt sind.

7. Projektionsanordnung nach einem der Ansprüche 1 bis 6, wobei die Heizdrähte von einer polymerhaltigen Ummantelung umgeben sind, bevorzugt von einer Ummantelung enthaltend Polyethylen, Polyvinylchlorid, Polytetrafluorethylen, Polyester, Polycarbonate, Gummi, Silikongummi, Polyamid, Polyurethan oder daraus bestehend.

8. Projektionsanordnung nach einem der Ansprüche 1 bis 7, wobei die Windschutzscheibe (10) mit der Reflexionsbeschichtung (20) im Spektralbereich von 400 nm bis 680 nm einen gemittelten Reflexionsgrad gegenüber p-polarisierter Strahlung von mindestens 15% aufweist, bevorzugt von mindestens 20%.

9. Projektionsanordnung nach einem der Ansprüche 1 bis 8, wobei
- unterhalb der elektrisch leitfähigen Schicht (21) eine erste untere dielektrische Schicht (22), bevorzugt auf Basis von Siliziumnitrid, und eine zweite untere dielektrische Schicht (22), bevorzugt auf Basis von Zinkoxid, angeordnet sind und/oder
- oberhalb der elektrisch leitfähigen Schicht (21) eine erste obere dielektrische Schicht (23), bevorzugt auf Basis von Siliziumnitrid, und eine zweite obere dielektrische Schicht (23), bevorzugt auf Basis von Zinkoxid, angeordnet sind.

10. Projektionsanordnung nach einem der Ansprüche 1 bis 9, wobei
- unterhalb der elektrisch leitfähigen Schicht (21) eine erste untere dielektrische Schicht (22), bevorzugt auf Basis von Siliziumnitrid, eine zweite untere dielektrische Schicht (22), bevorzugt auf Basis von Zinkoxid, und eine dritte untere dielektrische Schicht (22), bevorzugt auf Basis eines Silizium-Metall-Mischnitrids, insbesondere Silizium-Zirkonium-Mischnitrid oder Silizium-Hafnium-Mischnitrid, angeordnet sind und/oder
- oberhalb der elektrisch leitfähigen Schicht (21) eine erste obere dielektrische Schicht (23), bevorzugt auf Basis von Siliziumnitrid, eine zweite obere dielektrische Schicht (23), bevorzugt auf Basis von Zinkoxid, und eine dritte obere dielektrische Schicht (23), bevorzugt auf Basis eines Silizium-Metall-Mischnitrids, insbesondere Silizium-Zirkonium-Mischnitrid oder Silizium-Hafnium-Mischnitrid, angeordnet sind.

11. Projektionsanordnung nach einem der Ansprüche 1 bis 10, wobei die Reflexionsbeschichtung (20) mindestens eine metallische Blockerschicht (24) umfasst, die oberhalb und/oder unterhalb der elektrisch leitfähigen Schicht (21) angeordnet ist und eine geometrische Dicke von weniger als 1 nm aufweist.

12. Projektionsanordnung nach einem der Ansprüche 1 bis 11, wobei die externen Oberflächen (I, IV) der Windschutzscheibe (10) im Wesentlichen parallel zueinander angeordnet sind.

13. Verfahren zur Herstellung einer Windschutzscheibe (10) einer Projektionsanordnung nach einem der Ansprüche 1 bis 12, wobei
a) eine Reflexionsbeschichtung (20) auf der Innenscheibe (1) oder der Außenscheibe (2) abgeschieden wird,
b) die Innenscheibe (2) und die Außenscheibe (1) gemeinsam gebogen werden,
c) Heizdrähte (40) in die Oberfläche der thermoplastischen Zwischenschicht (3) eingebracht werden,
d) die Heizdrähte (40) in Form von mindestens einem Draht über mehrere elektrische Leiter (8) endseitig kontaktiert werden,
e) die thermoplastische Zwischenschicht (3) mit elektrischen Leitern (8) zwischen der Innenscheibe (2) und der Außenscheibe (1) eingelegt wird und
f) die Außenscheibe (1) und die Innenscheibe (2) in einem Laminationsverfahren verbunden werden.

## Claims

1. Projection arrangement for a head-up display (HUD), comprising
- a windscreen (10) comprising an outer pane (1) and an inner pane (2) connected to each other by a thermoplastic intermediate layer (3), with a HUD area (B), wherein heating wires (40) are arranged between the outer pane (1) and the inner pane (2),
- a projector (4) directed towards the HUD area (B), the radiation from the projector (4) being predominantly p-polarised,
wherein the windscreen (10) is provided with a reflective coating (20) suitable for reflecting p-polarised radiation, wherein
- the reflective coating (20) has exactly one electrically conductive layer (21) based on silver,
- exactly one lower dielectric layer (22) or a sequence of layers (22) with a refractive index of at least 1.9 is arranged below the electrically conductive layer (21),
- exactly one upper dielectric layer (23) or a sequence of layers (23) is arranged above the electrically conductive layer (21), the refractive index of which is at least 1.9,
wherein all dielectric layers of the reflective coating (20) have a refractive index of at least 1.9, wherein refractive indices are related to a wavelength of 550 nm and are determined by means of ellipsometry,
and wherein
- the ratio of the optical thickness of the exactly one upper dielectric layer (23) or the layer sequence (23) to the optical thickness of the exactly one lower dielectric layer (22) or the layer sequence (22) is at least 1.7, wherein the optical thickness of a layer is the product of its geometric thickness and the refractive index at 550 nm, and the optical thickness of a layer sequence is the sum of the optical thicknesses of the individual layers.

2. Projection arrangement according to claim 1, wherein the reflective coating (20) is arranged on the outer side (III) of the inner pane (2) facing the thermoplastic intermediate layer (3) and the heating wires (40) are arranged between the outer pane (1) and the reflective coating (20).

3. Projection arrangement according to claim 1, wherein the reflective coating (20) is arranged on the inner side (II) of the outer pane (1) facing the thermoplastic intermediate layer (3) and the heating wires (40) are arranged between the reflective coating (20) and the inner pane (2).

4. Projection arrangement according to claim 1, wherein the reflective coating (20) is arranged on the inner side (IV) of the inner pane (2) and the heating wires (40) are arranged between the outer pane (1) and the inner pane (2).

5. Projection arrangement according to one of claims 1 to 4, wherein the heating wires (40) are embedded in the thermoplastic intermediate layer (3) on the side facing the inner pane (2) or are embedded in the thermoplastic intermediate layer (3) on the side facing the outer pane (1) (3), preferably on the side facing the outer pane (1).

6. Projection arrangement according to one of claims 1 to 5, wherein the heating wires (40) are made of a metal, preferably tungsten, copper or silver.

7. Projection arrangement according to one of claims 1 to 6, wherein the heating wires are surrounded by a polymer-containing sheath, preferably a sheath containing polyethylene, polyvinyl chloride, polytetrafluoroethylene, polyester, polycarbonates, rubber, silicone rubber, polyamide, polyurethane or consisting thereof.

8. Projection arrangement according to one of claims 1 to 7, wherein the windscreen (10) with the reflective coating (20) has an average reflectance of at least 15%, preferably at least 20%, in the spectral range from 400 nm to 680 nm with respect to p-polarised radiation.

9. Projection arrangement according to one of claims 1 to 8, wherein
- a first lower dielectric layer (22), preferably based on silicon nitride, and a second lower dielectric layer (22), preferably based on zinc oxide, are arranged below the electrically conductive layer (21), and/or
- a first upper dielectric layer (23), preferably based on silicon nitride, and a second upper dielectric layer (23), preferably based on zinc oxide, are arranged above the electrically conductive layer (21).

10. Projection arrangement according to one of claims 1 to 9, wherein
- below the electrically conductive layer (21) there is a first lower dielectric layer (22), preferably based on silicon nitride, a second lower dielectric layer (22), preferably based on zinc oxide, and a third lower dielectric layer (22), preferably based on a silicon-metal mixed nitride, in particular silicon-zirconium mixed nitride or silicon-hafnium mixed nitride, are arranged and/or
- above the electrically conductive layer (21), a first upper dielectric layer (23), preferably based on silicon nitride, a second upper dielectric layer (23), preferably based on zinc oxide, and a third upper dielectric layer (23), preferably based on a silicon-metal mixed nitride, in particular silicon-zirconium mixed nitride or silicon-hafnium mixed nitride, are arranged.

11. Projection arrangement according to one of claims 1 to 10, wherein the reflective coating (20) comprises at least one metallic blocking layer (24) which is arranged above and/or below the electrically conductive layer (21) and has a geometric thickness of less than 1 nm.

12. Projection arrangement according to one of claims 1 to **11,** wherein the external surfaces (I, IV) of the windscreen (10) are arranged substantially parallel to each other.

13. Method for manufacturing a windscreen (10) of a projection arrangement according to one of claims 1 to 12, wherein
a) a reflective coating (20) is deposited on the inner pane (1) or the outer pane (2),
b) the inner pane (2) and the outer pane (1) are bent together,
c) heating wires (40) are inserted into the surface of the thermoplastic intermediate layer (3),
d) the heating wires (40) in the form of at least one wire are connected at the ends via several electrical conductors (8),
e) the thermoplastic intermediate layer (3) with electrical conductors (8) is inserted between the inner pane (2) and the outer pane (1), and
f) the outer pane (1) and the inner pane (2) are joined in a lamination process.

## Revendications

1. Dispositif de projection pour un affichage tête haute (HUD), comprenant
- un pare-brise (10) comprenant une vitre extérieure (1) et une vitre intérieure (2) reliées entre elles par une couche intermédiaire thermoplastique (3), avec une zone HUD (B), dans laquelle des fils chauffants (40) sont disposés entre la vitre extérieure (1) et la vitre intérieure (2),
- un projecteur (4) dirigé vers la zone HUD (B), le rayonnement du projecteur (4) étant principalement polarisé p,
dans lequel le pare-brise (10) est pourvu d'un revêtement réfléchissant (20) adapté pour réfléchir le rayonnement polarisé p, dans lequel
- le revêtement réfléchissant (20) comporte exactement une couche électriquement conductrice (21) à base d'argent,
- exactement une couche diélectrique inférieure (22) ou une séquence de couches (22) avec un indice de réfraction d'au moins 1,9 est disposée sous la couche électriquement conductrice (21),
- exactement une couche diélectrique supérieure (23) ou une séquence de couches (23) est disposée au-dessus de la couche électriquement conductrice (21), dont l'indice de réfraction est d'au moins 1,9,
toutes les couches diélectriques du revêtement réfléchissant (20) ayant un indice de réfraction d'au moins 1,9, les indices de réfraction étant rapportés à une longueur d'onde de 550 nm et déterminés par ellipsométrie,
et
- le rapport entre l'épaisseur optique de la couche diélectrique supérieure unique (23) ou de la séquence de couches (23) et l'épaisseur optique de la couche diélectrique inférieure unique (22) ou de la séquence de couches (22) est d'au moins 1,7, l'épaisseur optique d'une couche étant le produit de son épaisseur géométrique et de l'indice de réfraction à 550 nm, et l'épaisseur optique d'une séquence de couches est la somme des épaisseurs optiques des couches individuelles.

2. Dispositif de projection selon la revendication 1, dans lequel le revêtement réfléchissant (20) est disposé sur le côté extérieur (III) de la vitre intérieure (2) faisant face à la couche intermédiaire thermoplastique (3) et les fils chauffants (40) sont disposés entre la vitre extérieure (1) et le revêtement réfléchissant (20).

3. Dispositif de projection selon la revendication 1, dans lequel le revêtement réfléchissant (20) est disposé sur la face intérieure (II) de la vitre extérieure (1) tournée vers la couche intermédiaire thermoplastique (3) et les fils chauffants (40) sont disposés entre le revêtement réfléchissant (20) et la vitre intérieure (2).

4. Dispositif de projection selon la revendication 1, dans lequel le revêtement réfléchissant (20) est disposé sur la face intérieure (IV) de la vitre intérieure (2) et les fils chauffants (40) sont disposés entre la vitre extérieure (1) et la vitre intérieure (2).

5. Dispositif de projection selon l'une des revendications 1 à 4, dans lequel les fils chauffants (40) sont noyés dans la couche intermédiaire thermoplastique (3) du côté tourné vers la vitre intérieure (2) ou sont noyés dans la couche intermédiaire thermoplastique (3) du côté tourné vers la vitre extérieure (1) (3), de préférence du côté tourné vers la vitre extérieure (1).

6. Dispositif de projection selon l'une des revendications 1 à 5, dans lequel les fils chauffants (40) sont en métal, de préférence en tungstène, en cuivre ou en argent.

7. Dispositif de projection selon l'une des revendications 1 à 6, dans lequel les fils chauffants sont entourés d'une gaine contenant un polymère, de préférence une gaine contenant du polyéthylène, du chlorure de polyvinyle, du polytétrafluoroéthylène, du polyester, des polycarbonates, du caoutchouc, du caoutchouc silicone, du polyamide, du polyuréthane ou composée de ceux-ci.

8. Dispositif de projection selon l'une des revendications 1 à 7, dans lequel le pare-brise (10) avec le revêtement réfléchissant (20) a une réflectance moyenne d'au moins 15 %, de préférence d'au moins 20 %, dans la gamme spectrale de 400 nm à 680 nm par rapport au rayonnement polarisé p.

9. Dispositif de projection selon l'une des revendications 1 à 8, dans lequel
- une première couche diélectrique inférieure (22), de préférence à base de nitrure de silicium, et une deuxième couche diélectrique inférieure (22), de préférence à base d'oxyde de zinc, sont disposées sous la couche électriquement conductrice (21), et/ou
- une première couche diélectrique supérieure (23), de préférence à base de nitrure de silicium, et une deuxième couche diélectrique supérieure (23), de préférence à base d'oxyde de zinc, sont disposées au-dessus de la couche électriquement conductrice (21).

10. Dispositif de projection selon l'une des revendications 1 à 9, dans lequel
- sous la couche électriquement conductrice (21) se trouvent une première couche diélectrique inférieure (22), de préférence à base de nitrure de silicium, une deuxième couche diélectrique inférieure (22), de préférence à base d'oxyde de zinc, et une troisième couche diélectrique inférieure (22), de préférence à base d'un nitrure mixte silicium-métal, en particulier un nitrure mixte silicium-zirconium ou un nitrure mixte silicium-hafnium, et/ou
- au-dessus de la couche électriquement conductrice (21), une première couche diélectrique supérieure (23), de préférence à base de nitrure de silicium, une deuxième couche diélectrique supérieure (23), de préférence à base d'oxyde de zinc, et une troisième couche diélectrique supérieure (23), de préférence à base d'un nitrure mixte silicium-métal, en particulier un nitrure mixte silicium-zirconium ou un nitrure mixte silicium-hafnium, sont disposées.

11. Dispositif de projection selon l'une des revendications 1 à 10, dans lequel le revêtement réfléchissant (20) comprend au moins une couche de blocage métallique (24) qui est disposée au-dessus et/ou au-dessous de la couche électriquement conductrice (21) et qui a une épaisseur géométrique inférieure à 1 nm.

12. Dispositif de projection selon l'une des revendications 1 à **11,** dans lequel les surfaces externes (I, IV) du pare-brise (10) sont disposées de manière sensiblement parallèle l'une à l'autre.

13. Procédé de fabrication d'un pare-brise (10) d'un dispositif de projection selon l'une des revendications 1 à 12, dans lequel
a) un revêtement réfléchissant (20) est déposé sur la vitre intérieure (1) ou la vitre extérieure (2),
b) la vitre intérieure (2) et la vitre extérieure (1) sont pliées ensemble,
c) des fils chauffants (40) sont insérés dans la surface de la couche intermédiaire thermoplastique (3),
d) les fils chauffants (40) sous la forme d'au moins un fil sont connectés aux extrémités via plusieurs conducteurs électriques (8),
e) la couche intermédiaire thermoplastique (3) avec les conducteurs électriques (8) est insérée entre la vitre intérieure (2) et la vitre extérieure (1), et
f) la vitre extérieure (1) et la vitre intérieure (2) sont assemblées dans un processus de laminage.
